# EUROPÄISCHE PATENTSCHRIFT

(11) **EP 2 630 407 B1**
(45) Veröffentlichungstag und Bekanntmachung des Hinweises auf die Patenterteilung: **29.03.2017**
(21) Anmeldenummer: 11771136.6
(22) Anmeldetag: 18.10.2011
(51) Int. Cl.: F21K 9/00, F21V 23/06, F21V 21/02, F21S 2/00, F21Y 105/00, F21Y 115/15, F21S 8/00, F21S 8/04

(54) **OLED-LEUCHTMITTEL FÜR EINE LEUCHTE**
OLED ILLUMINANT FOR A LAMP
MOYEN D'ÉCLAIRAGE À DELO POUR UNE LAMPE

(30) Priorität: 18.10.2010 DE 102010038251
(43) Veröffentlichungstag der Anmeldung: 28.08.2013
(73) Patentinhaber: Panasonic Corporation, Kadoma-shi, Osaka-fu (JP); OSRAM OLED GmbH, 93045 Regensburg (DE); OLEDWorks GmbH, 52068 Aachen (DE)
(72) Erfinder: SPINTGE, Ulrich, 45549 Sprockhövel (DE); DIEKMANN, Karsten, 94371 Rattenberg (DE); GÖÖTZ, Britta, 93051 Regensburg (DE); ROSSBACH, Steven, 08626 Adorf (DE); MUNTERS, Tom, B-3500 Hasselt (BE); VAN MONTFORT, Vincent, Johannes, Jacobus, NL-6135 HT Sittard (NL)
(74) Vertreter: Rüger, Barthelt & Abel
(86) Internationale Anmeldenummer: PCT/EP2011/068193
(87) Internationale Veröffentlichungsnummer: WO 2012/052440

(56) Entgegenhaltungen:
- WO-A2-2010/101405
- DE-A1-102006 015 437
- US-B1- 6 184 628

## Beschreibung

Die Erfindung betrifft eine Leuchte mit einem Halbleiterleuchtelement, beispielsweise einer Leuchtdiode (LED) und insbesondere einer organischen Leuchtdiode (OLED). Das Leuchtmittel ist als flächiges Leuchtmittel ausgestaltet. Der Bedarf an flächigen Leuchten nimmt zu. Solche Flächenleuchten werden zur Beleuchtung beispielsweise an Wänden oder Decken montiert und sind wegen ihrer Leuchtcharakteristik und des optisch ansprechenden Gesamteindrucks einerseits und des geringen Energieverbrauchs andererseits von Interesse.

Leuchten bestehend aus einem OLED-Leuchtmittel und einer Fassung sind im Stand der Technik bekannt. Zum Beispiel offenbart die DE 603 06 720 T2 eine auf einem Substrat angeordnete organische Leuchtdiodenschicht. Das Substrat ist plattenförmig ausgestaltet und weist an einer Schmalseite eine Zunge mit elektrischen Leiterbahnen auf. Mit Hilfe dieser Zunge kann das Substrat in eine entsprechende Einstecköffnung einer Fassung eingesteckt und über die Leiterbahnen kontaktiert werden. Eine flächige Montage an einer Wand oder Decke mit nebeneinander liegenden Leuchtflächen ist dabei schwierig. Es hat sich auch gezeigt, dass eine exakte Ausrichtung der Substrate in einer gemeinsamen Ebene nebeneinander bei einer solchen Verbindung zwischen Fassung und Leuchtmittel nicht mit der gewünschten Genauigkeit erfolgen kann.

Aus DE 603 06 721 T2 sind weitere Verbindungsmöglichkeiten zwischen Leuchtmittel und Fassung angegeben. Beispielsweise können auch bügelförmige Fassungen verwendet werden, die das Substrat an zwei gegenüberliegenden Stellen umgreifen. Die elektrische Kontaktierung zwischen der bügelförmigen Fassung und dem Leuchtmittel erfolgt dabei über die auf einer Flachseite des Substrats vorgesehenen Leiter oder über zwei an gegenüberliegenden Schmalseiten vorgesehene Substratzungen mit jeweiligen elektrischen Leitern. Eine solche Leuchte erfüllt nicht die Anforderungen an die Montierbarkeit bzw. die gewünschte ästhetische Wirkung. Die bügelförmige Fassung hat den Nachteil, dass das Leuchtmittel von einer Seite her in die Fassung eingeschoben werden muss. Bei einer Anordnung mehrerer Leuchtmittel in Reihen und/oder Spalten ist das Auswechseln zumindest der mittleren Leuchtmittels umständlich und aufwendig.

Eine weitere LED-Leuchte ist aus DE 10 2008 024 776 A1 bekannt. Eine Leuchtdiode ist in ein Gehäuse eingesteckt und von einem Reflektor umgeben, der ebenfalls mit dem Gehäuse verbunden ist. Zur elektrischen Kontaktierung sind magnetische Kontakte vorgesehen, die auf magnetische Kontaktflächen aufgesetzt werden können. An den magnetischen Kontaktflächen liegt die Versorgungsspannung an. Um eine Verpolung zu vermeiden, ist die magnetische Polarität der Kontaktflächen und der Kontaktfüße der LED-Leuchte so gewählt, dass sich zusammengehörige elektrische Kontakte magnetisch anziehen, während sich nicht zueinander gehörende elektrische Kontakte magnetisch abstoßen. Ein Berührschutz der elektrisch leitenden Teile ist nicht vorgesehen.

Aus US 6,184,628 B1 ist eine Vorrichtung gemäß dem Oberbegriff des Patentanspruches 1 bekannt. Die Vorrichtung enthält eine mehrfarbige LED-Birne. Die Birne hat ein Gehäuse mit einem standardisierten Gewinde, so dass die Birne in Leuchten verwendet werden kann, die bislang mit Glühbirnen betrieben wurden. Die LEDs sind auf einer Leiterplatte in einem Gehäuse der LED-Birne angeordnet.

Eine LED-Leuchte ist auch aus WO 2010/101405 A2 bekannt. Die LEDs sind auf einer Leiterplatte in einem Gehäuse der Leuchte angeordnet. In der Leiterplatte ist ein zentrales Loch vorgesehen, das von einem Kontaktsockel durchgriffen wird. Kontaktfahnen dieses Kontaktsockels liegen auf Leiterbahnen der Leiterplatte auf, um die LEDs zu kontaktieren. Der Sockel arbeitet mit einer Fassung zusammen, in die die Leuchte eingesteckt werden kann.

Aus DE 10 2006 015 437 A1 ist eine Leuchtfliese bekannt. Die Leuchtfliese hat einen Schichtaufbau aus einer vorderen Platte, einer OLED-Schicht und einer hinteren Platte. Der Zwischenraum zwischen der vorderen Platte und der hinteren Platte ist randseitig durch eine Dichtung abgedichtet. Die OLED-Schicht ist dazwischen angeordnet. In dem Bereich, in dem die OLED-Schicht auf der hinteren Platte aufliegt, ist in der hinteren Platte ein Rastkontakt vorhanden, um die Leuchtfliese mit einem bauseitig in einem Gebäude angebrachten Gegenstück zu verrasten und zugleich einen elektrischen Kontakt herzustellen.

Ausgehend vom Stand der Technik kann es als eine Aufgabe der vorliegenden Erfindung angesehen werden, ein einfach zu montierendes und leicht auszutauschendes Leuchtmittel mit flächigem Halbleiterleuchtelement für eine Leuchte zu schaffen, wobei ein einfacher Aufbau der Leuchte mit einer Gesamtleuchtfläche aus mehreren Leuchtmitteln ermöglicht werden soll.

Diese Aufgabe wird durch ein Leuchtmittel gemäß Patentanspruch 1 gelöst. Das Leuchtmittel weist ein Trägerelement mit einem Halbleiterleuchtelement auf. Das Trägerelement trägt das Halbleiterleuchtelement tragen. Als Halbleiterleuchtelement kommen alle flächigen Halbleiterleuchtelemente in Betracht. Bei dem Halbleiterleuchtelement handelt es sich insbesondere um eine organische Leuchtdiode (OLED) die mehrschichtig flächig auf eine Trägerfläche des Trägerelements aufgebracht ist. Das Trägerelement weist eine platten- oder folienartige Form auf. Seine Länge und seine Breite sind vorzugsweise mindestens um den Faktor 10 größer als seine Dicke. Das Trägerelement ist mehrschichtig aufgebaut und weist eine vordere sowie eine hintere Platte oder Folie, beispielsweise zwei Glasplatten, auf, zwischen denen das Halbleiterleuchtelement angeordnet ist.

Das platten- oder folienartige Trägerelement ist in einem Leuchtmittelgehäuse angeordnet. Das Leuchtmittelgehäuse weist eine Lichtaustrittsöffnung auf, durch die das Halbleiterleuchtelement Licht abstrahlen kann. Vorzugsweise umschließt das Leuchtmittelgehäuse das Trägerelement abgesehen von der Lichtaustrittsöffnung vollständig. Das Leuchtmittelgehäuse.ist elektrisch isolierend. Auf diese Weise ist ein Berührschutz gebildet, so dass das Leuchtmittel sowohl für Niederspannungsleuchten als auch für Hochvoltleuchten eingesetzt werden kann. Insbesondere weist das Leuchtmittelgehäuse einen Rahmen, der die Lichtaustrittsöffnung ringsum begrenzt, sowie eine Gehäuserückwand auf.

Auf dieser Rückseite des Leuchtmittelgehäuses an der Gehäuserückwand ist eine Leuchtmittel-Verbindungseinrichtung vorhanden. Sie dient zur Herstellung sowohl einer mechanischen als auch einer elektrischen Verbindung mit einer Fassung. Durch das Anordnen der Verbindungseinrichtung auf der der Vorderseite entgegengesetzten Rückseite des Leuchtmittels kann dieses die Fassung bei hergestellter Verbindung vollständig verdecken. Dadurch lässt sich ein besonders ästhetischer Gesamteindruck der Leuchte erreichen. Eine einfache Möglichkeit zur Verbindung zwischen Leuchtmittel und Fassung kann beispielsweise dadurch erreicht werden, dass die Leuchtmittel-Verbindungseinrichtung ein Rastmittel und/oder ein Steck-mittel aufweist. Das Leuchtmittel kann dabei vorzugsweise rechtwinklig zu der Ebene seiner vorzugsweise planen Leuchtfläche auf die Fassung aufgerastet oder aufgesteckt werden. Die Montage sowie der Austausch des Leuchtmittels sind dabei besonders einfach und können insbesondere werkzeuglos erfolgen.

Vorzugsweise ist an der Rückseite des Leuchtmittelgehäuses eine Ausnehmung vorhanden, die zur zumindest teilweisen Aufnahme der Fassung dient. Somit ragt die Fassung bei hergestellter Verbindung in die Ausnehmung des Leuchtmittelgehäuses hinein. Insbesondere ist die Leuchtmittel-Verbindungseinrichtung in der Ausnehmung angeordnet. Auf diese Weise ist es möglich, den Berührschutz an der Verbindungsstelle zwischen Leuchtmittel und Fassung zu verbessern und zudem eine flache Bauform für eine Flächenleuchte zu erreichen.

Die Leuchtmittel-Verbindungseinrichtung kann symmetrisch zu einem Symmetriepunkt oder einer Symmetrieachse auf der Rückseite des Leuchtmittelgehäuses ausgestaltet sein. Bei einer solchen Ausgestaltung ist es möglich, das Leuchtmittel in mehreren Orientierungen auf die Fassung aufzustecken.

Bei einem bevorzugten Ausführungsbeispiel weist der Rahmen des Leuchtmittelgehäuses eine Anlagefläche auf, an der eine Lichtabstrahlseite des Trägerelements insbesondere flächig anliegt. Sowohl die Anlagefläche, als auch die Lichtabstrahlseite sind insbesondere als plane Flächen ausgeführt. Auf diese Weise wird die Relativlage zwischen dem Leuchtmittelgehäuse und dem Trägerelement definiert. Vorzugsweise ist die Anlagefläche ringsumlaufend um die Lichtaustrittsöffnung vorgesehen. Eine unerwünschte Neigung der Lichtabstrahlseite gegenüber dem Leuchtmittelgehäuse kann vermieden werden. Solche Neigungen können insbesondere bei ausgeschalteter Leuchte unästhetische Spiegelwirkungen erzeugen, insbesondere dann, wenn die Leuchte mehrere in einer gemeinsamen Ebene angeordnete Leuchtmittel aufweist.

Um eine besonders gute Ausrichtung zwischen dem Leuchtmittel und der Fassung zu erreichen, ist es von Vorteil, wenn die Leuchtmittel-Verbindungseinrichtung mehrere Rastmittel und/oder Steckmittel aufweist, die mit Abstand zueinander an der Rückseite des Leuchtmittelgehäuses vorgesehen sind. Dadurch werden mehrere beabstandete Verbindungsstellen geschaffen, die eine genauere Lagefixierung des Leuchtmittels an der Fassung erlauben. Vorzugsweise kann an der Rückseite des Leuchtmittelgehäuses auch eine Fläche vorhanden sein, die bei hergestellter Verbindung an einer Gegenfläche der Fassung anliegt.

Im Leuchtmittelgehäuse können elastische Lagerelemente zwischen dem Trägerelement und dem Deckel angeordnet sein, die das Trägerelement mit seiner Lichtabstrahlseite gegen die Anlagefläche am Rahmen drücken. Auf diese Weise kann sichergestellt werden, dass das Trägerelement stets seine gewünschte Sollposition einnimmt. Eine Klebeverbindung zwischen Trägerelement ist dabei nicht notwendig, so dass das Trägerelement im Falle eines Defekts leicht ausgetauscht werden kann.

Zur elektrischen Verbindung mit der Fassung verfügt die Leuchtmittel-Verbindungseinrichtung vorzugsweise über elektrische Leuchtmittelanschlüsse, die an der Rückseite des Leuchtmittelgehäuses zugänglich sind und zusätzlich zu dem Rastmittel und/oder Steckmittel vorgesehen sein können. Dadurch lässt sich die mechanische und die elektrische Verbindung voneinander entkoppeln. Dies kann vorteilhaft sein, wenn das Leuchtmittel mit einer an einer Decke montierten Fassung zu verbinden ist. Die Last muss dann nicht von den elektrischen Leuchtmittelanschlüssen aufgenommen werden, sondern wird vom zusätzlichen mechanischen Verbindungsmittel aufgenommen.

Am Trägerelement können Halbleiterkontaktflächen vorgesehen sein, die elektrisch entweder mit der Anode oder mit der Kathode des Halbleiterleuchtelements verbunden sind. Ist am Trägerelement mehr als ein Halbleiterleuchtelement vorhanden, können entsprechend mehr als zwei Halbleiterkontaktflächen vorhanden sein. Vorzugsweise sind die Halbleiterkontaktflächen auf der der Lichtabstrahlseite entgegengesetzten Kontaktseite des Trägerelements vorhanden. Die Halbleiterleuchtelemente können daher im Leuchtmittel von der der Lichtabstrahlseite abgewandten Kontaktseite elektrisch kontaktiert werden. Die Halbleiterkontaktflächen sind innerhalb des elektrisch isolierenden Leuchtmittelgehäuses angeordnet und daher gegen Berührung gesichert.

Jeder Leuchtmittelanschluss der Leuchtmittel-Verbindungseinrichtung ist elektrisch mit einem Leuchtmittelkontakt verbunden. Diese elektrische Verbindung ist innerhalb des Leuchtmittelgehäuses vorgesehen. Jeder Leuchtmittelkontakt liegt an einer der Halbleiterkontaktflächen an. Vorzugsweise ist hierfür im Leuchtmittelgehäuse ein elektrisch leitendes Leuchtmittelkontaktteil angeordnet, das sowohl den Leuchtmittelkontakt als auch den Leuchtmittelanschluss aufweist. Das Leuchtmittelkontaktteil kann als einstückiges Stanz- und/oder Biegeteil ohne Füge- oder Verbindungsstellen aus einem einheitlichen Material ausgeführt sein. Ein solches Leuchtmittelkontaktteil lässt sich einfach und wirtschaftlich herstellen. Bein einem bevorzugten Ausführungsbeispiel weist das Leuchtmittelkontaktteil eine Federzone auf, die eines der Lagerelemente bildet. Über die Federzone wird das Trägerelement gegen die Anlagefläche des Rahmens elastisch vorgespannt. Separate Lagerelemente können bei dieser Ausgestaltung entfallen.

Die zum Leuchtmittel gehörende Fassung weist ein Fassungsgehäuse auf, das an der dem Leuchtmittel zugeordneten Verbindungsseite eine Fassungsanschlusseinrichtung aufweist. Über die Fassungsanschlusseinrichtung kann die mechanische sowie die elektrische Verbindung mit dem Leuchtmittel hergestellt werden. Dabei wirken die Fassungsanschlusseinrichtung und die Leuchtmittel-Verbindungseinrichtung vorzugsweise zusammen. Die der Verbindungsseite entgegengesetze Montageseite des Fassungsgehäuses dient vorzugsweise zur Befestigung des Fassungsgehäuses an einer Befestigungsfläche. Fassungsgehäuseseiten verbinden die Verbindungsseite und die Montageseite des Fassungsgehäuses. An zumindest einer Fassungsgehäuseseite sind Versorgungsanschlüsse für eine elektrische Verbindung der Fassung mit einer Versorgungsleitung vorhanden. Vorzugsweise sind solche Versorgungsanschlüsse an mehreren Fassungsgehäuseseiten vorgesehen, so dass die elektrische Verdrahtung einer Leuchte mit mehreren Fassungen vereinfacht ist.

Die Versorgungsanschlüsse der Fassung sind entweder dem Pluspol oder dem Minuspol zugeordnet. Bei einer vorteilhaften Ausgestaltung sind alle Versorgungsanschlüsse mit derselben Polarität elektrisch miteinander kurzgeschlossen. Dadurch vereinfacht sich eine Reihen- oder Parallelschaltung mehrerer Fassungen einer Leuchte. An jeder Fassungsgehäuseseite mit Versorgungsanschlüssen sind zum Beispiel jeweils ein Versorgungsanschluss mit positiver Polarität und ein Versorgungsanschluss mit negativer Polarität vorgesehen. Es ist besonders bevorzugt, wenn auf allen Fassungsgehäuseseiten Versorgungsanschlüsse mit positiver und negativer Polarität vorhanden sind.

Vorzugsweise sind im Fassungsgehäuse insbesondere zwei elektrisch leitende Kurzschlussverbinder vorhanden. Jeder Kurzschlussverbinder kann als einstückiges Stanz- und/oder Biegeteil ohne Füge- oder Verbindungsstellen aus einem einheitlichen Material hergestellt sein. Jeder Kurzschlussverbinder weist mehrere Anschlussflächen auf. Jedem durch den Kurzschlussverbinder kurzzuschließenden Versorgungsanschluss ist eine der Anschlussflächen eines gemeinsamen Kurzschlussverbinders zugeordnet. An diesen Anschlussflächen liegen die elektrischen Adern der Versorgungsleitung an, wenn die Fassung an die Versorgungsleitung angeschlossen ist.

Bei einem bevorzugten Ausführungsbeispiel weist die Fassungsanschlusseinrichtung elektrische Fassungsanschlüsse auf, die zur elektrischen Verbindung mit dem Leuchtmittel dienen. Dabei kann insbesondere eine zusätzliche mechanische Verbindung über Rastmittel und/oder Steckmittel erfolgen. Die Fassungsanschlüsse arbeiten beispielsweise mit den Leuchtmittelanschlüssen eines zugeordneten Leuchtmittels zusammen.

Vorzugsweise sind auch die Fassungsanschlüsse gleicher Polarität miteinander elektrisch kurzgeschlossen. Insbesondere erfolgt diese Kurzschlussverbindung durch einen der Kurzschlussverbinder. Auf diese Weise ist es möglich, an der Fassung mehrere Fassungsanschlüsse derselben Polarität bereitzustellen, die alle auf demselben Potenzial liegen. Jeder am Leuchtmittel vorgesehene Leuchtmittelanschluss kann daher wahlweise mit einem der Fassungsanschlüssen derselben Polarität verbunden werden. Dabei ergibt sich auch die Möglichkeit, dass das Leuchtmittel in verschienen Orientierungen bzw. Ausrichtungen mit der Fassung verbunden werden kann.

Es ist außerdem von Vorteil, wenn der dem Minuspol zugeordnete Kurzschlussverbinder und der dem Pluspol zugeordnete Kurzschlussverbinder eine identische Form aufweisen. Dabei genügt es, lediglich eine Form des Kurzschlussverbinders herzustellen, was die Kosten der Fassung reduziert. Jeder Kurzschlussverbinder kann einen Verbindungsabschnitt und vom Verbindungsabschnitt abgewinkelte Kontaktflächen aufweisen. In Gebrauchslage können sich die Kurzschlussverbinder kreuzen, wobei sie mit Isolationsabstand zueinander angeordnet sind. Um diesen Isolationsabstand zu erreichen, werden die beiden Kurzschlusskörper vorzugsweise in umgekehrter Lage in das Fassungsgehäuse eingesetzt.

Eine erfindungsgemäße Leuchte weist ein Leuchtmittel sowie ein Fassung auf. Vorzugsweise sind mehrere Fassungen nebeneinander an einer Befestigungsfläche angeordnet, beispielsweise in Reihen und/oder Spalten. Dabei bilden die an den Fassungen befestigten Leuchtmittel insbesondere eine gemeinsame Gesamtleuchtfläche. Das Leuchtmittelgehäuse kann vorzugsweise rechteckförmig konturiert sein, so dass mehrere eine gemeinsame Gesamtleuchtfläche bildende Leuchtmittel an einer Längsseite oder eine Querseite des Leuchtmittelgehäuses aneinander anliegen.

Vorteilhafte Ausgestaltungen der Erfindung ergeben sich aus den abhängigen Patentansprüchen sowie der Beschreibung. Die Beschreibung beschränkt sich auf wesentliche Merkmale der Erfindung sowie sonstiger Gegebenheiten. Die Zeichnung ist ergänzend heranziehen. Es zeigen:
Figur 1 eine schematische, blockschaltbildähnliche Darstellung einer Leuchte mit mehreren Leuchtmitteln und mehreren Fassungen,
Figur 2 ein Ausführungsbeispiel eines Leuchtmittels in perspektivischer Explosionsdarstellung,
Figur 2a eine perspektivische Darstellung eines Leuchtmittelkontaktteils des Leuchtmittels nach Figur 2,

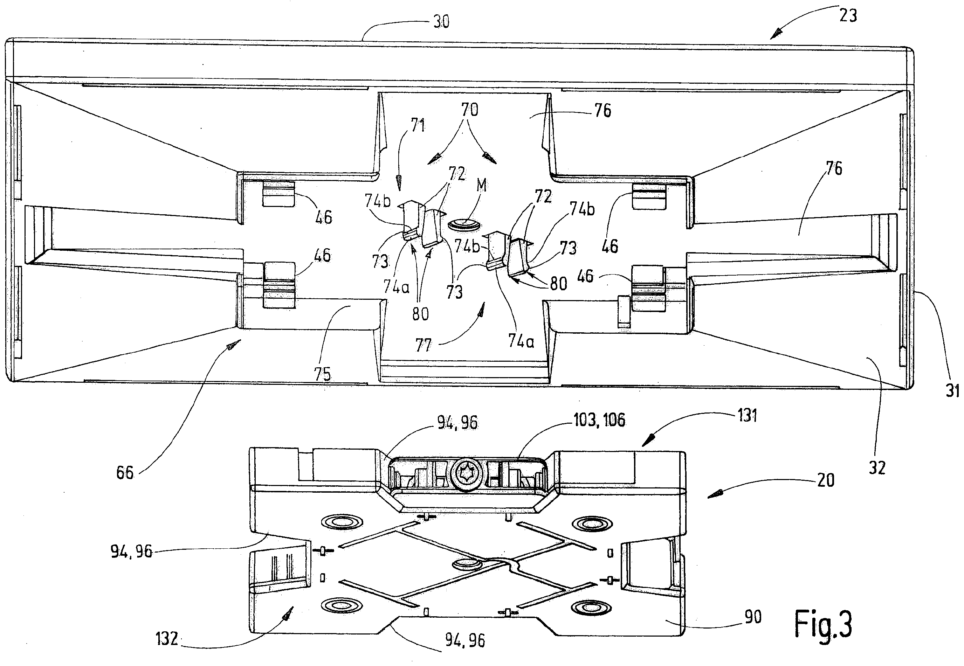

Figur 3 eine perspektivische Darstellung des Leuchtmittels gemäß Figur 2 mit Blick auf die Rückseite sowie eine perspektivische Darstellung eines Ausführungsbeispiels einer Fassung,
Figur 4 das Leuchtmittel und die Fassung nach Figur 3 bei hergestellter Verbindung,
Figur 5 die perspektivische Darstellung des Leuchtmittels und der Fassung gemäß Figur 4, wobei die Gehäuserückwand des Leuchtmittels sowie die Montagefläche der Fassung entfernt wurden, um die elektrische Verbindung zu veranschaulichen,
Figur 6 eine perspektivische Explosionsdarstellung der Fassung gemäß der Figuren 3 bis 5,
Figur 7 die Fassung aus Figur 6 in teilmontiertem Zustand,

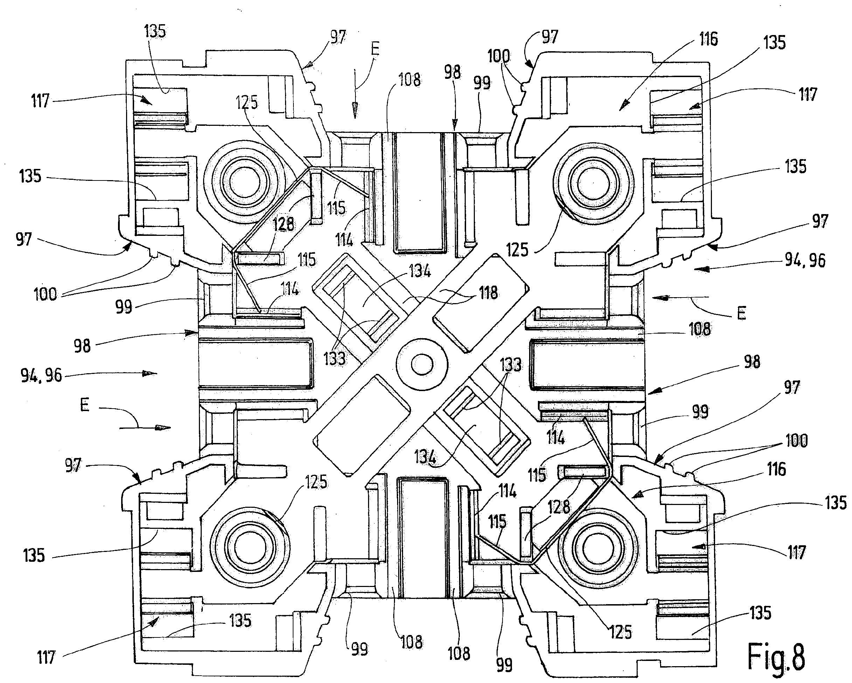

Figur 8 eine Draufsicht auf das geöffnete Fassungsgehäuse mit Blickrichtung von der Montageseite her,

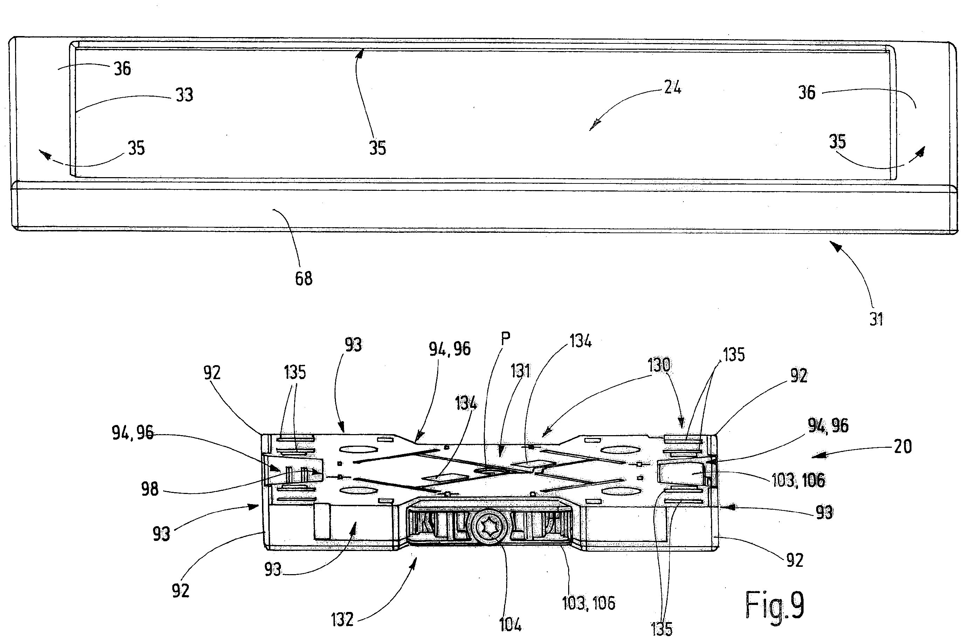

Figur 9 eine perspektivische Ansicht auf das Leuchtmittel und die Fassung nach Figur 3 mit Blickrichtung schräg auf die Vorderseite des Leuchtmittels und die Verbindungsseite der Fassung und

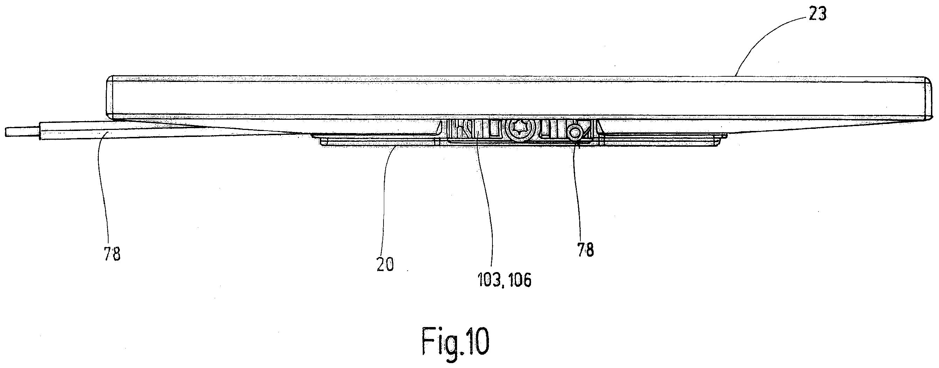

Figur 10 eine Seitenansicht auf das Leuchtmittel und die Fassung bei hergestellter Verbindung.

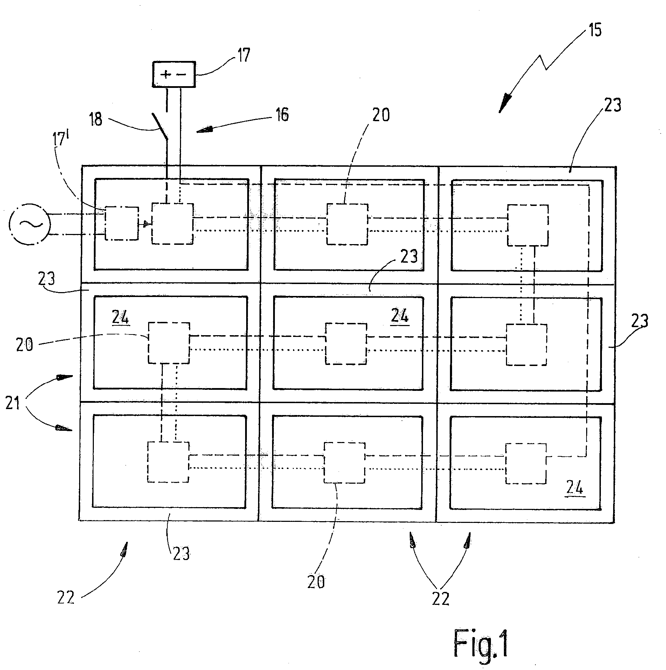

Figur 1 zeigt eine blockschaltbildähnliche Prinzipdarstellung einer Leuchte 15, die über eine Versorgungsleitung 16 an eine Spannungsquelle 17 angeschlossen ist. Die Spannungsquelle 17 stellt eine Gleichspannung zur Versorgung der Leuchte 15 bereit. Als Spannungsquelle 17 kann beispielsweise ein Vorschaltgerät dienen. Lediglich symbolisch ist hier ein Schalter 18 in der Versorgungsleitung 16 vorhanden, der zum Ein- bzw. Ausschalten der Leuchte 15 dient. Anstelle einer Spannungsquelle 17 könnte auch eine Stromquelle 17' verwendet werden, wie dies strichpunktiert schematisch veranschaulicht ist. Die Stromquelle 17' kann Bestandteil eines Vorschaltgerätes sein. Die Stromquelle 17' kann auch als Stromtreiber innerhalb der Fassung 20 angeordnet und mit dem herkömmlichen Spannungsnetz verbindbar sein. An die Stromquelle 17' sind die Fassungen 20 vorzugsweise in Reihe geschaltet.

Die Leuchte 15 weist wenigstens eine Fassung 20 auf. Beim Ausführungsbeispiel nach Figur 1 sind mehrere Fassungen 20 vorgesehen, die regelmäßig beabstandet in mehreren Reihen 21 und mehreren Spalten 22 matrixartig angeordnet sind. Jede Fassung 20 ist mit einem Leuchtmittel 23 sowohl mechanisch als auch elektrisch verbunden. Beim Ausführungsbeispiel sind die Leuchtmittel 23 rechteckförmig gestaltet. Die Leuchtflächen 24 der Leuchtmittel 23 bilden eine gemeinsame Gesamtleuchtfläche der Leuchte 15. Sie liegen dabei vorzugsweise an den Längskanten oder den Querkanten aneinander an. Der Abstand der Fassungen 20 ist entsprechend festgelegt. Zur Verbindung eines Leuchtmittels 23 mit einer Fassung 20 wird dieses in Aufsteckrichtung rechtwinklig zu seiner Leuchtfläche 24 auf die zugeordnete Fassung 20 werkzeuglos aufgesteckt bzw. aufgerastet. In entgegengesetzter Abzugsrichtung kann das Leuchtmittel 23 auch von der Fassung 20 vorzugsweise werkzeuglos abgezogen werden.

Die Erfindung befasst sich zum einen mit der Ausgestaltung des Leuchtmittels 23 und unabhängig davon mit der Ausgestaltung der Fassung 20. Die Fassung 20 und das Leuchtmittel 23 können außerdem zu einer Leuchte 15 kombiniert werden.

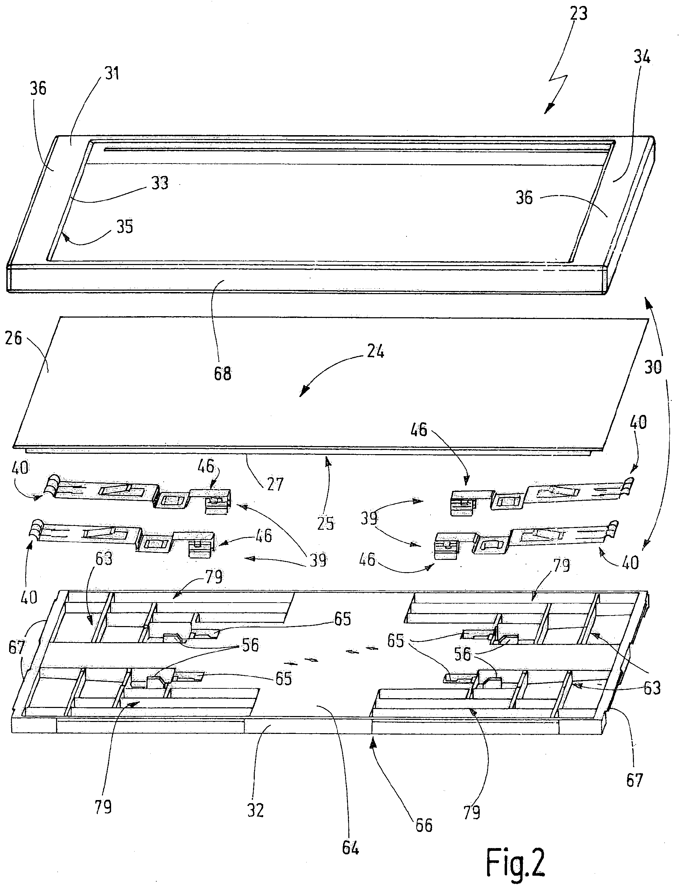

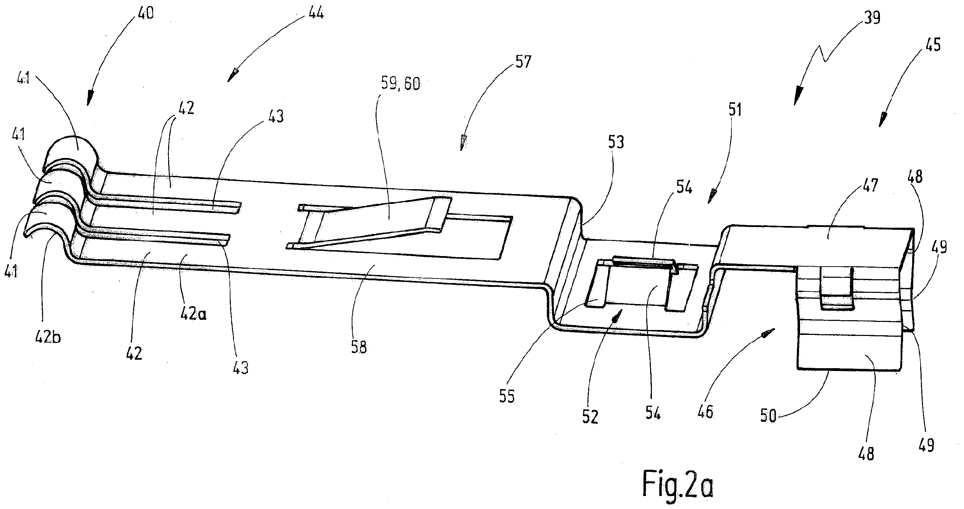

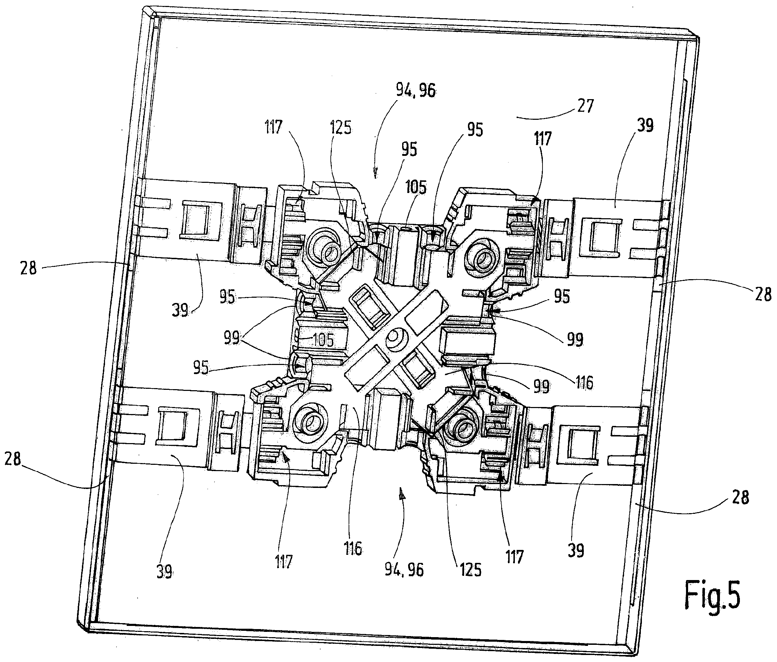

Figur 2 zeigt eine perspektivische Explosionsdarstellung eines Ausführungsbeispiels des Leuchtmittels 23. Das Leuchtmittel 23 weist ein Trägerelement 25 auf, das platten- oder folienartig ausgestaltet ist. Das Trägerelement 25 weist das Halbleiterleuchtelement auf oder ist Bestandteil des Halbleiterleuchtelements. Beim Ausführungsbeispiel ist das Trägerelement 25 sandwichartig in mehreren Schichten aufgebaut. Das Halbleiterleuchtelement ist dabei zwischen einer vorderen transparenten Platte oder Folie 26 und einer hinteren Platte oder Folie 27 angeordnet. Beim Ausführungsbeispiel sind die Platten 26, 27 als Glasplatten ausgeführt. Die vordere Platte oder Folie 26 ist größer als die hinter Platte oder Folie 27 und ragt beim Ausführungsbeispiel an zwei gegenüberliegenden Seiten über die hintere Platte oder Folie 27 hinaus. Die dem Halbleiterleuchtelement abgewandte vordere Fläche der vorderen Platte oder Folie 26 bildet die Leuchtfläche 24 des Leuchtmittels 23. An der der Leuchtfläche 24 abgewandeten Kontaktseite der vorderen Platte 26 sind elektrische Kontaktflächen 28 angeordnet. Es können ein oder mehrere Paare von Kontaktflächen 28 vorgesehen sein.. Beim Ausführungsbeispiel sind zwei Paare von Kontaktflächen 28 an den beiden Überständen der vorderen Platte 26 vorhanden. Das Halbleiterleuchtelement kann daher an verschiedenen Stellen kontaktiert werden, um ein gleichmäßigeres Leuchtbild zu erreichen, auch wenn große Leuchtflächen 24 vorgesehen werden. Eine Kontaktfläche 28 eines Paares ist mit der Anode und die andere Kontaktfläche 28 desselben Paares mit der Kathode des Halbleiterleuchtelements verbunden. Die Kontaktflächen 28 sind in Figur 5 dargestellt. Die Kontaktflächen 28 sind beim Ausführungsbeispiel an zwei gegenüberliegenden Seiten des Halbleiterleuchtelements angeordnet.

Beim bevorzugten Ausführungsbeispiel ist die Leuchtfläche 24 als plane Fläche ausgestaltet. Bei der in Figur 1 dargestellten Leuchte 15 befinden sich die planen Leuchtflächen 24 der Leuchtelemente 23 in einer gemeinsamen Ebene. Es können auf diese Weise große Gesamtleuchtflächen an Decken oder Wänden aus den einzelnen Leuchtflächen 24 der Leuchtmittel 23 modular zusammengesetzt werden.

Das Leuchtmittel 23 weist ferner ein Leuchtmittelgehäuse 30 auf, das aus elektrisch isolierendem Material besteht. Dabei ist der Begriff elektrisch isolierend hier so zu verstehen, dass die üblicherweise an Leuchten 15 angelegten Gleichspannungen bis zu etwa 200 V und Gleichströme bis zu etwa 2 bis 3 A isoliert werden. Das Leuchtmittelgehäuse 30 besteht aus einem Rahmen 31 und einer Gehäuserückwand 32, zwischen denen das Trägerelement 25 gelagert ist. Der Rahmen 31 weist eine Lichtaustrittsöffnung 33 auf, die beim Ausführungsbeispiel rechteckig konturiert ist. Durch die Lichtaustrittsöffnung 33 wird das Licht von der Leuchtfläche 24 abgestrahlt. Die Leuchtfläche 24 stellt damit die Lichtabstrahlseite des Trägerelements 25 dar. Das Leuchtmittelgehäuse 30 besteht vorzugsweise aus Kunststoff, beispielsweise Polycarbonat. Es kann dann sehr einfach und kostengünstig durch Spritzgießen hergestellt werden. Polycarbonat ist amorph und hat einen geringen Verzug.

Das Leuchtmittelgehäuse 30 weist vorzugsweise eine quadratische oder rechteckige Kontur auf. Beim bevorzugten Ausführungsbeispiel hat es eine Größe von 150 mal 150 Millimetern. Es werden Seitenlängen bevorzugt, die einem ganzzahligen Teiler von 600 Millimetern entsprechen, da Decken in Büro- oder Fabrikgebäuden häufig ein Raster von 600 mal 600 Millimetern aufweisen. Dadurch ergeben sich beispielsweise Gehäuseabmessungen (Länge mal Breite oder Breite mal Länge) von 300 mal 300 Millimetern, 150 mal 300 Millimetern, 200 mal 150 Millimetern, 100 mal 100 Millimetern, 100 mal 200 Millimetern, usw.

Die Dicke oder Tiefe des Leuchtmittelgehäuses 30 zwischen der Leuchtfläche 24 und einer Rückseite 66 der Gehäuserückwand 32 nimmt von einem mittleren Bereich zu allen Seiten nach außen hin ab. Durch diese sich verjüngende Gehäuseform entsteht ein besonders vorteilhafter ästhetischer Eindruck. Die Flachheit des Leuchtmittelgehäuses 30 wird betont. Zugleich ist im mittleren Bereich ausreichend Raum für die Aufnahme der Fassung 20.

Ein ringsumlaufender Steg 34 umgibt die Lichtaustrittsöffnung 33. An der der Leuchtfläche 24 zugewandten Seite weist der Steg 34 eine Anlagefläche 35 auf, an der der äußere Rand der Lichtabstrahlseite des Trägerelements 25 anliegt. Die Anlagefläche 35 ist als plane Fläche ausgeführt. In Abwandlung zum Ausführungsbeispiel könnte die Anlagefläche 35 auch lediglich an den beiden Stegabschnitten 36 vorgesehen sein, die auf gegenüberliegenden Seiten der Lichtaustrittsöffnung 33 vorgesehen sind. Insbesondere sind die Stegabschnitte 36 an der Stelle vorgesehen, an der die Kontaktflächen 28 am Trägerelement 25 bzw. an der vorderen Platte 26 angeordnet sind, um gleichzeitig einen ausreichenden Berührschutz zu gewährleisten. Bei allen Ausgestaltungen der Anlagefläche 35 ist diese so auszuführen, dass eine gewünschte Ausrichtung der Leuchtfläche 24 gegenüber dem Leuchtmittelgehäuse 30 hergestellt ist. Dies kann im Prinzip bereits durch drei beabstandete Anlagestellen erreicht werden.

Zwischen der Gehäuserückwand 32 und dem Trägerelement 25 sind Leuchtmittelkontaktteile 39 zur elektrischen Kontaktierung des Halbleiterleuchtelements vorgesehen. Eine vergrößerte Darstellung des Leuchtmittelkontaktteils 39 ist in Figur 2a veranschaulicht. Das Leuchtmittelkontaktteil 39 ist als einstückiger Körper hergestellt und verfügt über keine Verbindungs- oder Nahtstellen und besteht aus einem einheitlichen Material. Es ist vorzugsweise als StanzBiegeteil ausgeführt und wird zur Herstellung aus einem Blech ausgestanzt und anschließend in die gewünschte Form gebogen.

Das Leuchtmittelkontaktteil 39 weist einen Leuchtmittelkontakt 40 auf, mit dem das Leuchtmittelkontaktteil 39 an der zugeordneten Kontaktfläche 28 am Trägerelement 25 anliegt. Der Leuchtmittelkontakt 40 kann mehrere Kontaktstellen 41 aufweisen, mit denen der Leuchtmittelkontakt 40 an der zugeordneten Kontaktfläche 28 anliegt. Beim Ausführungsbeispiel sind mehrere und vorzugsweise drei Kontaktzungen 42 vorgesehen, die jeweils gleich ausgestaltet sind. Jede Kontaktzunge 42 weist einen ebenen Abschnitt 42a auf, an den sich der die Kontaktstelle 41 aufweisende freie Endabschnitt 42b anschließt. Der Endabschnitt 42b ist vom ebenen Abschnitt 42a abgewinkelt und weist einen gebogenen Verlauf auf. Die Kontaktzungen 42 sind gegeneinander beweglich und durch Schlitze 43 voneinander getrennt. In Gebrauchslage entsteht dadurch eine Federwirkung der Kontaktzungen 42, so dass die Kontaktstellen 41 mit einer gewissen Federvorspannung an der Kontaktfläche 28 anliegen.

Beim bevorzugten Ausführungsbeispiel nach Figur 2 weist das Leuchtmittel 23 jeweils zwei Kontaktflächen 28 für die Anode und die Kathode auf. Jeder Kontaktfläche 28 ist ein Leuchtmittelkontaktteil 39 zugeordnet. Dementsprechend weist das Leuchtmittel 23 vier Leuchtmittelkontaktteile 39 auf.

Der Leuchtmittelkontakt 40 bildet das erste Ende 44 des Leuchtmittelkontaktteils 39. Am entgegengesetzten zweiten Ende 45 weist das Leuchtmittelkontaktteil 39 einen Leuchtmittelanschluss 46 auf, der zur elektrischen Verbindung mit der Fassung 20 dient. Der Leuchtmittelanschluss 46 ist als Rast-Steckanschluss ausgestaltet. Er weist zwei über ein Querstück 47 miteinander verbundene Kontaktflügel 48 auf, die identisch ausgestaltet sind. Die Kontaktflügel 48 ragen quer vom Querstück 47 weg, wobei sie sich zunächst bis zu einer Biegestelle 49 aneinander annähern und sich ab der Biegestellte 49 zu ihrem jeweiligen freien Ende 50 hin voneinander entfernen. Die beiden Kontaktflügel 48 haben an den einander gegenüberliegenden Biegestellen 49 den geringsten Abstand. Die Kontaktflügel 48 ragen vom Querstück in eine Richtung entgegen der abgebogenen Enden 42b des Kontaktteils 40 weg. Das Querstück 47 liegt in etwa in derselben Ebene wie der ebene Abschnitt 42a der Kontaktzungen 42.

Das erste Ende 45 des Leuchtmittelkontaktteils 39 geht in einen Halteabschnitt 51 über, an dem eine Halteklemme 52 vorgesehen ist. Beispielsgemäß weist der Halteabschnitt 51 eine Abkröpfung 53 auf, innerhalb der sich die Halteklemme 52 befindet. Die Halteklemme ist durch zwei gegenüberliegende Klemmzungen 54 gebildet, die auf gegenüberliegenden Seiten einer Halteausnehmung 25 am Halteabschnitt 51 federnd gelagert sind. Die beiden Federzungen 54 erstrecken sich schräg aufeinander zu oberhalb der Halteöffnung 55 in der Abkröpfung 53, so dass ihre freien Enden in der Abkröpfung 43 nebeneinander liegend angeordnet sind. In Gebrauchslage wird das Leuchtmittelkontaktteil 39 auf einen Haltevorsprung 56 an der Gehäuserückwand 32 aufgesteckt, der durch die Halteöffnung 55 hindurch greift und dabei auf beiden Seiten durch die Klemmzungen 54, klemmend beaufschlagt wird.

Zwischen dem Halteabschnitt 51 und dem ersten Ende 44 weist das Leuchtmittelkontaktteil 39 eine Federzone 57 auf. Die Federzone 57 weist eine elastisch federnd an einem Zungenhalteteil 58 der Federzone 57 angeordnete Federzunge 59 auf. Diese ist insbesondere aus dem Zungenhalteteil 58 ausgestanzt und am Rand der ausgestanzten Öffnung abgewinkelt. Die Federzunge 59 ragt schräg vom Zungenhalteteil 58 weg. Beim Ausführungsbeispiel befindet sich das Zungenhalteteil 58 in ebener Verlängerung des ebenen Abschnitts 42a der Kontaktzungen 42. In Gebrauchslage dient die Federzunge 59 der Federzone 57 als elastisches Lagerelement 60. Zwischen der Gehäuserückwand 32 und dem Trägerelement 25 sind ein oder mehrere elastische Lagerelemente 60 vorgesehen, um das Trägerelement 25 gegen die Anlagefläche 35 am Rahmen 31 zu drücken, so dass dieses die gewünschte Position einnimmt. Wie in Figur 2 veranschaulicht sind hier vier Lagerelemente 60 vorhanden. Beim bevorzugten Ausführungsbeispiel sind diese durch die Federzone 57 und insbesondere durch die Federzunge 59 gebildet. Die Federzunge 59 liegt in Gebrauchslage an dem Trägerelement 25 unter Federvorspannung an.

In montierten Zustand sitzen die Leuchtmittelkontaktteile 39 in jeweils einem Aufnahmebereich 63 an der dem Trägerelement zugeordneten Seite 64 der Gehäuserückwand 32. Jeder Aufnahmebereich 63 weist für den Leuchtmittelanschluss 46 eine Leuchtmittelanschlussöffnung 65 auf, die die Gehäuserückwand 32 vollständig durchsetzt. Dadurch ist der Leuchtmittelanschluss 46 bzw. sind die Kontaktflügel 48 von der der Innenseite 64 entgegengesetzten Rückseite 66 der Gehäuserückwand 32 zugänglich.

Bei hergestelltem Gebrauchszustand des Leuchtmittels 23 umschließt der Rahmen 31 die Gehäuserückwand 32 an deren Außenumfang vollständig. Dabei wird zwischen dem Rahmen 31 und der Gehäuserückwand 32 vorzugsweise eine Rastverbindung hergestellt. Beim Ausführungsbeispiel sind hierfür an der Gehäuserückwand 32 an zumindest zwei gegenüberliegenden Seitenkanten Rastnasen 67 vorgesehen, die in Vertiefungen an der Innenseite an der ringsumlaufenden Rahmenwange 68 eingreifen.

An der Rückseite 66 des Leuchtmittels 23 bzw. des Leuchtmittelgehäuses 30 ist eine Leuchtmittel-Verbindungseinrichtung 70 vorhanden, die zur Herstellung sowohl der elektrischen, als auch der mechanischen Verbindung mit der Fassung 20 dient. Zu der Leuchtmittel-Verbindungseinrichtung 70 gehören zumindest zwei und beispielgemäß vier Leuchtmittelanschlüsse 46. Diese Leuchtmittelanschlüsse 46 sind jeweils mit einem Leuchtmittelkontakt 40 über das Leuchtmittelkontaktteil 39 elektrisch leitend verbunden und stellen somit die elektrische Verbindung zur jeweiligen Anode bzw. Katode des Halbleiterleuchtelements bereit.

Zu der Leuchtmittel-Verbindungseinrichtung 70 gehören ferner Rastmittel 71, die ausschließlich zur Herstellung oder Unterstützung der mechanischen Verbindung zwischen dem Leuchtmittel 23 und der Fassung 20 dienen. Die Rastmittel 71 sind beim beschriebenen Ausführungsbeispiel durch mehrere Rastvorsprünge 72 gebildet. Die Rastvorsprünge 72 ragen von der Rückseite 66 des Leuchtmittelgehäuses 30 weg. An ihrem freien Ende ist seitlich eine Rastauswölbung 73 vorgesehen. Bei hergestellter Rastverbindung durchgreifen die Rastvorsprünge 72 eine Rastausnehmung 74 an der Fassung und die Rastauswölbungen 73 hintergreifen jeweils eine zugeordnete Rastkante an der Fassung 20. Beim Ausführungsbeispiel sind die Rastvorsprünge 72 paarweise mit Abstand nebeneinander angeordnet. Die Rastauswölbungen 73 ragen in entgegengesetzte Richtungen vom jeweils benachbarten Rastvorsprung 72 weg.

Die Form und/oder die Größe der Rastvorsprünge 72 und insbesondere der Rastauswölbungen 73 kann so gewählt werden, dass zum einen ein ausreichender Halt der Rastverbindung gewährleistet wird und zum anderen die Kräfte beim Herstellen und/oder Trennen der Rastverbindung nicht zu groß werden. Zum Beispiel kann die Neigung und/oder die Größe einer sich an das freie Ende des Rastvorsprungs 72 anschließenden Schrägfläche 74a der Rastauswölbung 73 zur Einstellung der gewünschten Aufsteckkraft beim Herstellen der Rastverbindung vorgegeben werden. Analog kann die Neigung und/oder die Größe einer Rastanlagefläche74b, mit der die Rastauswölbung 73 bei hergestellter Rastverbindung an der zugeordneten Rastkante der Fassung 20 anliegt, zur Einstellung der gewünschten Abzugskraft beim Trennen der Rastverbindung vorgegeben werden. Die Größe und Neigung der Flächen 74a, 74b bezieht sich auf die Erstreckungsrichtung der Rastauswölbung 73 quer zur Aufsteck- bzw. Abzugsrichtung des Leuchtmittels 23. Die Aufsteck- und/oder die Abzugskraft werden angepasst an die Stabilität des Leuchtmittels 23, um dieses beim Aufstecken uns Abziehen nicht zu beschädigen.

Die Leuchtmittel-Verbindungseinrichtung 70 ist in einer Ausnehmung 75 der Gehäuserückwand 32 angeordnet. Die Leuchtmittelanschlüsse 46 und die Rastvorsprünge 72 sind punktsymmetrisch zu einem Mittelpunkt M der Aussparung 75 bzw. der Rückseite 66 angeordnet. Die Rastvorsprünge 72 sind fluchtend entlang einer radialen Geraden durch den Mittelpunkt M an der Gehäuserückwand 32 angeordnet. Beim Ausführungsbeispiel kann das Leuchtmittel 23 somit um 180 Grad gedreht werden und in beiden Drehlagen mit der Fassung 20 verbunden werden.

Bei einer abgewandelten Ausführungsform kann eine Kodiereinrichtung vorgesehen sein. Die Leuchtmittel-Verbindungseinrichtung 70 weisen ein Kodierelement 80 auf, das mit einem Kodiergegenelement der Fassung 20 zusammenarbeitet und die Herstellung der Verbindung zwischen Leuchtmittel 23 und Fassung lediglich in den zulässigen Relativlagen ermöglicht. Auf diese Weise können elektrisch falsche Verbindungen zwischen Fassung 20 und Leuchtmittel 23 verhindert werden. Es können auch mehrere Kodierelemente 80 vorgesehen sein. Jedem Kodierelement 80 ist ein Kodiergegenelement des Fassung 20 zugeordnet. Das Kodierelement 80 und das zugeordnete komplementäre Kodiergegenelement können beliebige Formen aufweisen. Das Kodierelement 80 kann zum Beispiel auch durch einen Rastvorsprung 72 gebildet sein oder am Rastvorsprung 72 angeordnet sein. Beim Ausführungsbeispiel dienen die Rastvorsprünge 72 als Kodierelemente 80, die aufgrund ihrer Position lediglich die beiden oben beschriebenen Orientierungen des Leuchtmittels 23 beim Herstellen der Verbindung mit der Fassung 20 zulassen. Die Kodiereinrichtung kann alternativ auch lediglich eine oder mehr als zwei mögliche Relativlagen zwischen dem Leuchtmittel 23 und der Fassung 20 beim Herstellen der Verbindung zuzulassen.

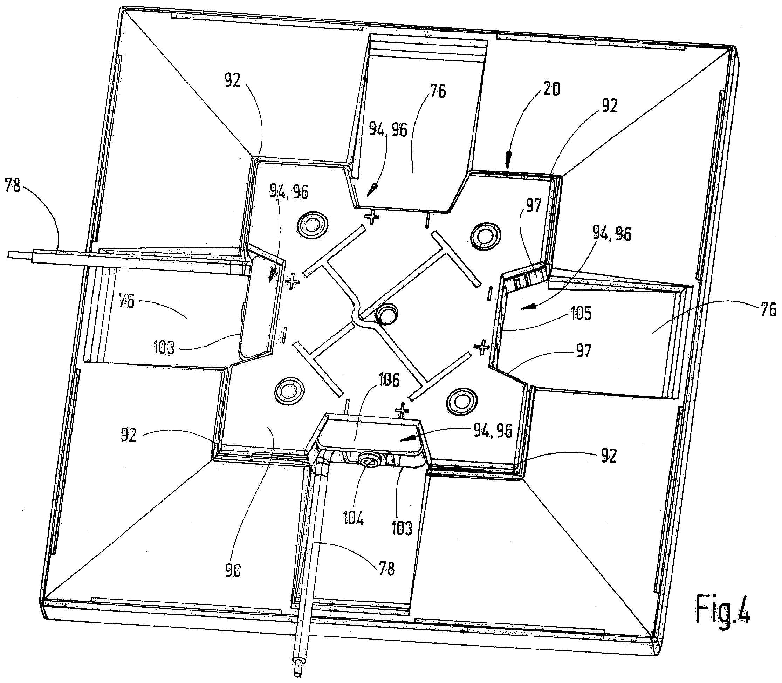

Die Aussparung 75 weist hier eine rechteckförmige und insbesondere quadratische Kontur auf. Die Aussparung 75 ist mittig in der Gehäuserückwand 32 vorgesehen. An allen vier Seiten setzt sich die Aussparung 75 in jeweils einem Versorgungskanal 76 fort. Die Kanäle 76 und die Aussparung 75 haben einen gemeinsamen, vorzugsweise planen Boden 77, der innerhalb der Aussparung 75 und der Versorgungskanäle die Rückseite 66 der Gehäuserückwand 32 bildet. Bei hergestellter Verbindung zwischen der Fassung 20 und dem Leuchtmittel 23 dienen die Versorgungskanäle 76 zur Aufnahme der mit der Fassung 20 verbundenen Kabel 78 der Versorgungsleitung 16 (Figur 4). Im Bereich der Verbindungskanäle 76 und der Aussparung 75 ist die Gehäuserückwand 32 an ihrer Innenseite im Wesentlichen eben ausgebildet. Neben diesem im Wesentlichen ebenen Bereich weist die Gehäuserückwand 32 in ihrem jeweiligen Eckbereich eine Anordnung von Versteifungsrippen 79 auf. In einem jeweiligen Eckbereich mit Versteifungsrippen 79 ist der Aufnahmebereich 63 für ein jeweiliges Leuchtmittelkontaktteil 39 vorgesehen. Die Versteifungsrippen 79 weisen zur Aufnahme des Leuchtmittelkontaktteils 39 im Aufnahmebereich 63 Aussparungen auf.

Das Leuchtmittel 23 besteht beim Ausführungsbeispiel aus lediglich wenigen Einzelteilen: dem Leuchtmittelgehäuse 30, dem Trägerelement 25 mit einem oder mehreren Halbleiterleuchtelementen und jeweils zwei Leuchtmittelkontaktteilen 39 für jedes vorhandene Halbleiterleuchtelement. Die Leuchtmittelkontaktteile 39 sind identisch. Somit lässt sich das Leuchtmittel 23 kostengünstig herstellen. Mehrere Leuchtmittel 23 lassen sich auf einfache Weise gruppieren, wobei die Leuchtflächen 24 problemlos in einer Ebene ausgerichtet werden können. Es lassen sich Leuchten 15 mit einer großen Gesamtleuchtfläche aufbauen. Das Leuchtmittel 23 eignet sich wegen der Kapselung der elektrischen Anschlüsse im Leuchtmittelgehäuse 30 auch für höhere Gleichspannungen im Bereich von 200 V.

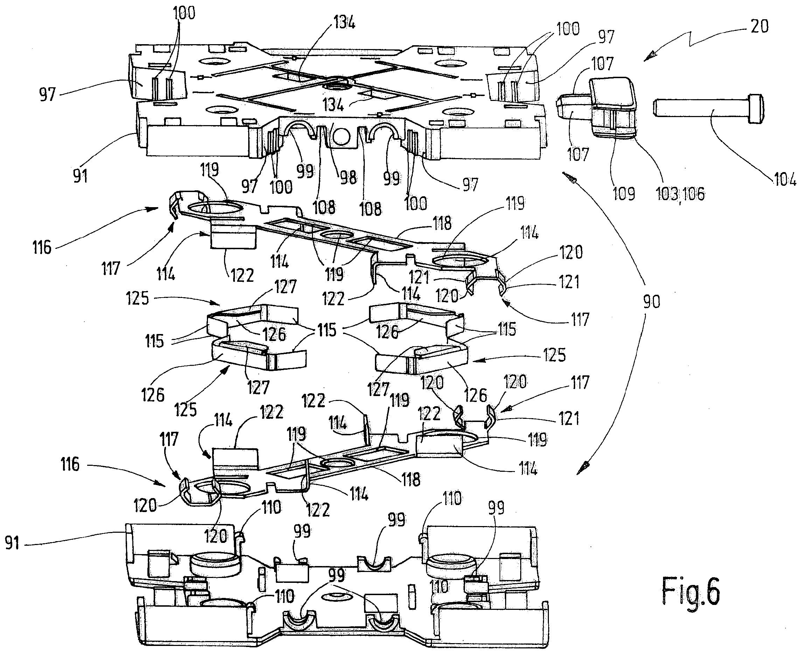

In Figur 6 ist eine erfindungsgemäße Fassung 20 in Explosionsdarstellung gezeigt. Die Fassung 20 weist ein Fassungsgehäuse 90 auf, das beim Ausführungsbeispiel aus zwei verbindbaren Gehäuseschalen 91 besteht. Das Fassungsgehäuse 90 weist vier rechtwinklige Ecken 92 auf, an denen zwei benachbarte Fassungsgehäuseseiten 93 aneinander angrenzen. An zumindest einer, vorzugsweise mehreren und beim Ausführungsbeispiel an allen Fassungsgehäuseseiten 93 ist ein Anschlussbereich 94 mit zumindest einem elektrischen Versorgungsanschluss 95 vorhanden.

Der Versorgungsanschlussbereich 94 ist durch eine Anschlussaussparung 96 im Fassungsgehäuse 90 gebildet. Die Anschlussaussparung ist in Draufsicht auf das Fassungsgehäuse 90 trapezförmig ausgeführt und stellt einen Einschnitt in die jeweilige Fassungsgehäuseseite 93 dar. Ausgehend von den an die Ecken 92 anschließenden Seitenabschnitten verjüngt sich die Anschlussaussparung 96 durch zwei gegenüberliegende Klemmseiten 97 nach innen. Die Klemmseiten 97 sind über einen mittleren Seitenabschnitt 98 miteinander verbunden. In diesem mittleren Seitenabschnitt 98 ist für jeden Versorgungsanschluss 95 eine Anschlussöffnung 99 vorgesehen. Beim Ausführungsbeispiel ist jeweils eine Hälfte der Anschlussöffnung 99 an einer der beiden Gehäuseschalen 91 vorgesehen. An den Klemmseiten 97 sind beim Ausführungsbeispiel einer oder mehrere vorspringe Klemmstege 100 vorhanden.

Die Fassung 20 weist Versorgungsanschlüsse 95 unterschiedlicher Polarität auf. Ein Teil der Versorgungsanschlüsse 95 ist dem Minuspol und ein anderer Teil dem Pluspol der Versorgungsgleichspannung zugeordnet. An jeder Fassungsgehäuseseite 93 ist zumindest ein dem Pluspol zugeordneter Versorgungsanschluss 95 sowie ein dem Minuspol zugeordneter Versorgungsanschluss 95 vorhanden. Bei dem hier beschriebenen Ausführungsbeispiel der Fassung 20 ist in jedem Versorgungsanschlussbereich 94 ein dem Pluspol und ein dem Minuspol zugeordneter Versorgungsanschluss 95 vorgesehen. Bei hergestellter Verbindung mit dem Leuchtmittel 23 befindet sich der Versorgungsanschlussbereich 94 an der Stelle innerhalb der Aussparung 75, an der die Versorgungskanäle 76 in die Aussparung 75 übergehen. Die maximale Breite der Anschlussaussparung 96 entspricht dabei in etwa der Breite des Versorgungskanals 76.

Jedem Versorgungsanschlussbereich 94 ist ein Zugentlastungsmittel 103 zugeordnet, das lösbar am Fassungsgehäuse 20 befestigt werden kann, beispielsgemäß mit Hilfe einer zentralen Schraube 104. Ein Innengewinde 105 ist am Fassungsgehäuse 90 vorgesehen und zum mittleren Seitenabschnitt 98 hin offen. Das Zugentlastungsmittel 103 ist von einem Klemmkörper 106 gebildet, der eine an die Anschlussaussparung 96 angepasste Kontur aufweist. In Draufsicht ist er daher ebenfalls trapezförmig konturiert. Auf seiner dem mittleren Seitenabschnitt 98 zugeordneten Innenseite weist er zwei flache Einsteckzungen 107 auf, die in zugeordnete Einsteckschlitze 108 am Fassungsgehäuse 90 eingesteckt werden können. Die Einsteckschlitze 108 befinden sich jeweils zwischen dem Innengewinde 105 und einer Anschlussöffnung 99.

An seinen den Klemmseiten 97 zugeordneten Seiten weist der Klemmkörper 106 eine Klemmkante 109 auf, die bei am Fassungsgehäuse 90 befestigtem Klemmkörper 106 den beiden Klemmstegen 100 der zugeordneten Klemmseite 97 mit Abstand gegenüberliegt. Ein zwischen der Klemmkante 109 und den Klemmstegen 100 vorhandenes Kabel 78 wird kraftschlüssig eingeklemmt und dadurch zugentlastet. Durch die Schraubverbindung 104, 105 kann die Zugentlastung ausreichende Zugkräfte am Kabel 78 aufnehmen. Die Anzahl der Klemmkanten 109 und der Klemmstege 100 zur Kabelklemmung kann variieren.

Die mechanische Verbindung zwischen den beiden Gehäuseschalen 91 kann durch eine Rastverbindung hergestellt werden, wobei hierfür an der einen Gehäuseschale 91 mehrere Rasthaken 110 vorgesehen sind, die mit nicht näher dargestellten Rastgegenmitteln an der anderen Gehäuseschale 91 beim Zusammenstecken der beiden Gehäuseschalen 91 in Rastverbindung gebracht werden können.

Die Versorgungsanschlüsse 95 sind in Form von elektrischen Klemmanschlüssen ausgestaltet. Jeder Versorgungsanschluss 95 weist eine elektrisch leitende Anschlussfläche 114 auf. Jeder Anschlussfläche 114 ist eine federnde Anschlussklemme 115 zugeordnet, deren freies Ende in Ruhelage an der Anschlussfläche 114 anliegt oder zumindest mit geringem Abstand gegenüberliegt. Die Anschlussfläche 114 ist parallel zu einer Einsteckrichtung E neben der Einstecköffnung 99 angeordnet. Auf der gegenüberliegenden Seite der Einstecköffnung 99 ist die Anschlussklemme 115 federnd schwenkbar angelenkt. In Ausgangslage verläuft die Anschlussklemme 115 somit hinter der zugeordneten Anschlussöffnung 99 schräg zur Anschlussfläche 114 hin. Beim Einstecken eines Adernendes eines Kabels 78 wird die Anschlussklemme 115 durch das in Einsteckrichtung E eingesteckte Adernende von der zugeordneten Anschlussfläche 114 weggeschwenkt und drückt das nicht isolierte Adernende federnd gegen die Anschlussfläche 114, so dass ein sicherer elektrischer Kontakt zwischen der Ader des Kabels 78 und der Anschlussfläche 114 hergestellt ist. Auf diese Weise kann bei der Montage einer Leuchte 15 eine sehr einfache Verkabelung der Fassungen 20 erfolgen. Da die Fassung 20 auf mehreren und beispielsgemäß allen Fassungsgehäuseseiten 93 Versorgungsanschlüsse 95 aufweist, kann die Versorgungsleitung 16 von allen Seiten her an die Fassung 20 angeschlossen werden.

Im Fassungsgehäuse 90 sind alle Versorgungsanschlüsse 95 derselben Polarität miteinander kurzgeschlossen und liegen somit auf demselben Potenzial. Dadurch ist eine sehr einfache Reihen- oder Parallelschaltung von mehreren Fassungen 20 bzw. der zugeordneten Leuchtmittel 23 ermöglicht, weil das Fassungsgehäuse 90 wahlweise an einem der Versorgungsanschlüsse 95 elektrisch mit einem Versorgungsanschluss 95 eines anderen Fassungsgehäuses 90 verbunden werden kann. Bei dem in Figur 1 dargestellten Ausführungsbeispiel der Leuchte 15 sind die Fassungen 20 miteinander in Reihe geschaltet (Versorgungsleitung 16 mit durchgezogenen und gestrichelten Linien). Die Versorgungsleitung 16 wird vom Pluspol der Spannungsquelle 17 der Reihe nach durch alle Fassungen 20 geführt und ausgehend von der letzten Fassung 20 vorzugsweise auf direktem Weg zurück bis zum Minuspol der Spannungsquelle 17 geführt. Ebenso einfach wäre auch eine Parallelschaltung der Fassungen 20 möglich, was in Figur 1 alternativ durch die gepunktete Versorgungsleitung 16 angedeutet ist. Dadurch, dass die Fassungen 20 von allen Seiten her Versorgungsanschlüsse 95 aufweisen ist der Verkabelungsaufwand bei einer Leuchte 15 mit mehreren Fassungen 20 sehr gering.

Die Fassungen 20 können auch gruppenweise an jeweils eine zugeordnete Spannungsquelle 17 oder Stromquelle 17' angeschlossen und vorzugsweise in Reihe oder auch parallel zueinander geschaltet werden.

Der Kurzschluss der Versorgungsanschlüsse 95 gleicher Polarität wird dadurch erreicht, dass die Anschlussflächen 114 der Versorgungsanschlüsse 95 gleicher Polarität an einem gemeinsamen Kurzschlussverbinder 116 vorgesehen sind. Der Kurzschlussverbinder 116 ist als elektrisch leitendes Bauteil ausgestaltet. Beim Ausführungsbeispiel ist er einstückig ohne Verbindungs- und Fügestellen aus einem einheitlichen Material hergestellt und insbesondere als StanzBiegeteil ausgestaltet. Der Kurzschlussverbinder 116 kann beispielsweise aus einem elektrisch leitenden Blech ausgestanzt und in die gewünschte Form gebogen werden und lässt sich dadurch kostengünstig und einfach herstellen. Alle Kurzschlussverbinder 116 sind identisch. Für die Fassung 20 muss daher nur ein einziger Typ und eine einzige Form des Kurzschlussverbinders 116 hergestellt werden.

Der Kurzschlussverbinder 116 weist zudem einen oder mehrere Fassungsanschlüsse 117 auf, die zur elektrischen Verbindung mit einem zugeordneten Leuchtmittel 23 dienen. Beim Ausführungsbeispiel sind an jedem Kurzschlussverbinder 116 zwei Fassungsanschlüsse 117 vorgesehen, die mithin über den Kurzschlussverbinder 116 elektrisch kurzgeschlossen sind. Dadurch sind nicht nur die Versorgungsanschlüsse 95 gleicher Polarität, sondern auch die Fassungsanschlüsse 117 gleicher Polarität elektrisch kurzgeschlossen, beispielsgemäß über einen gemeinsamen Kurzschlussverbinder 116. Beim Ausführungsbeispiel dient die Fassung 20 zum Anschließen eines Leuchtmittels mit zwei Halbleiterleuchtelementen, die jeweils einen Anoden- und einen Kathodenanschluss aufweisen. Deswegen sind zwei Fassungsanschlüsse 117 mit positiver Polarität und zwei Fassungsanschlüsse 117 mit negativer Polarität vorgesehen. Die Anzahl der Paare von Fassungsanschlüssen 117 unterschiedlicher Polarität kann somit von der Anzahl der im Leuchtmittel 23 vorhandenen Halbleiterleuchtelemente abhängen.

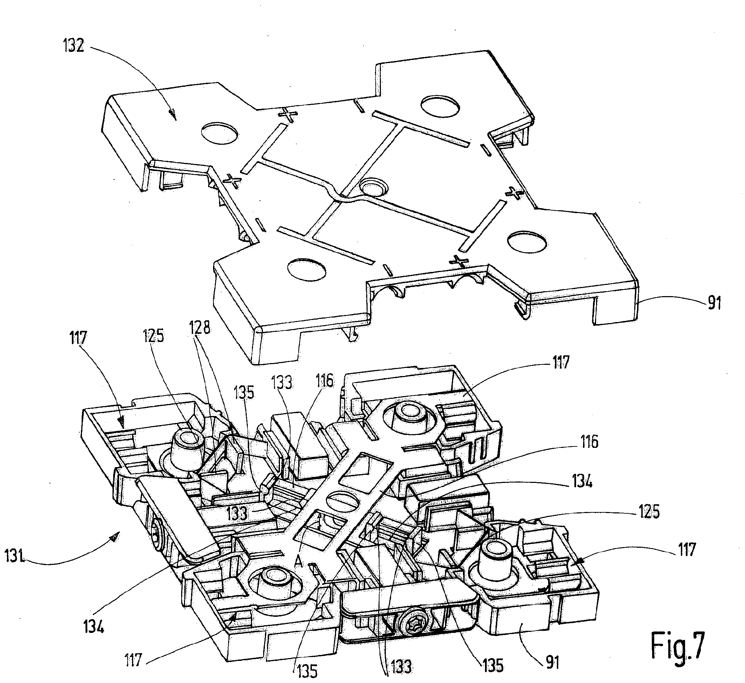

Jeder Kurzschlussverbinder 116 weist einen sich im Wesentlichen in einer Ebene erstreckenden Basisabschnit 118 auf. In diesem Basisabschnitt 118 können mehrere Durchbrechungen 119 vorhanden sein. Durch die Durchbrechungen 119 können verschiedne Positionier- oder Verbindungsmittel, die im Fassungsgehäuse 90 vorgesehen sein, hindurchgreifen, wie dies beispielsweise in Figur 7 dargestellt ist.

An den beiden entgegengesetzten Enden des Basisabschnitts 118 ist jeweils ein Fassungsanschluss 117 vorgesehen. Der Fassungsanschluss 117 weist zwei sich quer vom Basisabschnitt 118 weg erstreckende, gegenüberliegende Anschlusszungen 120 auf. Ausgehend vom Basisabschnitt 118 verlaufen die beiden Anschlusszungen 120 zunächst voneinander weg bis zu einer Knickstelle 121 und ab der Knickstelle bis zu ihrem jeweiligen freien Ende wieder aufeinander zu, wobei die freien Enden voneinander beabstandet sind. Die beiden Anschlusszungen 121 sind identisch ausgestaltet. Der Fassungsanschluss ist symmetrisch zu einer Mittelebene. Die jeweiligen Mittelebenen durch die Fassungsanschlüsse 117 eines Kurzschlussverbinders 116 verlaufen mit Abstand zueinander parallel. Gegenüber einer Längsmittelachse durch den Basisabschnitt 118 sind die Mittelebenen der Fassungsanschlüsse 117 um etwa 45 Grad abgewinkelt.

Die am Kurzschlussverbinder 116 vorgesehenen Anschlussflächen 114 sind an im Wesentlichen planen Anschlussteilen 122 vorgesehen. Die Anschlussflächen 114 sind gegenüber der Längsmittelachse durch den Basisabschnitt 118 um etwa 45 Grad geneigt. Sie verlaufen entweder parallel zu den Mittelebenen der Fassungsanschlüsse 117 oder rechtwinklig dazu. Vom Basisabschnitt 118 ragen die Anschlussteile 122 mit den Anschlussflächen 114 im Wesentlichen rechtwinklig weg. Die freien Enden der Anschlusszungen 120 und die freien Endkanten der Anschlussteile 122 sind mit Abstand zum Basisabschnitt 118 auf derselben Seite angeordnet und können vorzugsweise in etwa in einer Ebene liegen. Abgesehen von den Fassungsanschlüssen 117 ist der Kurzschlussverbinder 116 symmetrisch zu seiner Längsmittelebene ausgestaltet.

Jede Anschlussfläche 114 eines Kurzschlussverbinders 116 ist einem anderen Versorgungsanschlussbereich 94 zugeordnet. Einer der Kurzschlussverbinder 114 enthält die Anschlussflächen 114 der Versorgungsanschlüsse 95 positiver Polarität, während der andere Kurzschlussverbinder 116 die Anschlussflächen 114 der Versorgungsanschlüsse 95 negativer Polarität aufweist.

Die Versorgungsanschlüsse 95 gleicher Polarität unmittelbar benachbarter Versorgungsanschlussbereiche 94 sind in Umfangsrichtung um das Fassungsgehäuse 90 gesehen nebeneinander angeordnet, das heißt ausgehend von einer Ecke 92 folgt an beiden Fassungsgehäuseseiten 93 ein Versorgungsanschluss 95 mit derselben Priorität. Diesen beiden Versorgungsanschlüssen 95 ist ein gemeinsamer Klemmkörper 125 zugeordnet, dessen Endabschnitte jeweils eine Anschlussklemme 115 für unterschiedliche Versorgungsanschlüsse 95 bilden. Die beiden Anschlussklemmen 115 sind über ein Mittelstück 126 miteinander verbunden. Die Anschlussklemmen 115 ragen quer vom Mittelstück 126 weg, wobei sich ihr Abstand vergrößert. Zwischen dem Mittelstück 126 und der Anschlussklemme 115 ist etwa ein Winkel im Bereich von 100 bis 110 Grad eingeschlossen. Der Übergang zwischen der Anschlussklemme 115 und dem Mittelstück 126 ist beim Ausführungsbeispiel zweifach abgewinkelt ausgeführt. An einer Längskante des Mittelstücks 126 ist rechtwinklig ein Abstützteil 127 abgebogen, das in Gebrauchslage an der Grundfläche eines der beiden Gehäusehälften 91 aufliegt. Im Übergangsbereich zwischen dem Mittelstück 126 und dem Klemmelement 115 stützt sich der Anschlussklemmkörper 125 an jeweils einem Stützvorsprung 128 des Fassungsgehäuses 90 ab. Der Stützvorsprung 128 ist gegenüber der Anschlussfläche 114 neben der Anschlussöffnung 99 in einer der beiden Gehäusehälften 91 angeordnet. Das Abstützteil 127 ist zwischen den beiden Stützvorsprüngen 128 angeordnet.

Für die vier Versorgungsanschlüsse 95 positiver Polarität und die vier Versorgungsanschlüsse negativer Polarität sind beispielsgemäß jeweils zwei und insgesamt vier Anschlussklemmkörper 125 vorgesehen. Die vier Anschlussklemmkörper 125 sind identisch.

In Gebrauchslage kreuzen sich die beiden Kurzschlussverbinder 116 im Fassungsgehäuse 90, wobei sie an der Kreuzungsstelle mit Isolationsabstand A zueinander verlaufen. An der Kreuzungsstelle sind zwischen den beiden Kurzschlussverbindern 116 keine isolierenden Materialien vorgesehen. Der Bereich zwischen den beiden Kurzschlussverbindern 116 an der Kreuzungsstelle ist als Freiraum ausgestaltet. Um den Isolationsabstand A an der Kreuzungsstelle zu erreichen, ist einer der beiden Kurzschlusskörper 116 in Rückenlage und um beispielsgemäß 90 Grad gegen den jeweils anderen Kurzschlusskörper 116 gedreht im Fassungsgehäuse 90 angeordnet. Die freien Enden der Anschlussteile 122 und/oder der Anschlusszungen 120 des einen Kurzschlusskörpers 116 liegen vorzugsweise in einer Ebene, in der der Basisabschnitt 118 des jeweils anderen Kurzschlusskörpers 116 liegt. Zumindest ist der Abstand der Ebene, in der die freien Enden der Anschlussteile 122 und/oder der Anschlusszungen 120 des einen Kurzschlusskörpers 116 liegen zum Basisabschnitt 118 des anderen Kurzschlusskörpers 116 kleiner als der Abstand zwischen den beiden Kurzschlusskörpern 116. Der Basisabschnitt 118 des einen Kurzschlussverbinders liegt an der Innenseite einer Gehäusehälfte 91 an, während der Basisabschnitt 118 des jeweils anderen Kurzschlussverbinders 116 an der Innenseite der jeweils anderen Gehäuseschale 91 anliegt. Mit anderen Worten befinden sich die Basisabschnitte 118 der beiden Kurzschlussverbinder 116 in mit Isolationsabstand A angeordneten im Wesentlichen parallel Ebenen im Fassungsgehäuse 90.

Die Fassung 20 weist eine Fassungsanschlusseinrichtung 130 auf, die zur mechanischen und zur elektrischen Verbindung der Fassung 20 mit einem zugeordneten Leuchtmittel 23 dient. Zu der Fassungsanschlusseinrichtung 130 gehören die Fassungsanschlüsse 117, die beispielsgemäß an den Kurzschlussverbindern 116 vorgesehen sind. Die Fassungsanschlusseinrichtung 130 weist ferner mechanische Verbindungsmittel auf, die die mechanische Verbindung mit dem Leuchtmittel 23 alleine oder gemeinsam mit den Fassungsanschlüssen 117 sicherstellen. Die Fassungsanschlusseinrichtung 130 ist an einer Verbindungsseite 131 des Fassungsgehäuses 90 vorgesehen und von dieser Verbindungsseite 131 her zugänglich. Die der Verbindungsseite 131 entgegengesetzte Montageseite 132 dient zum Befestigen des Fassungsgehäuses an einer Befestigungsfläche, beispielsweise der Wand oder der Decke eines Raumes oder einer sonstigen Fläche.

Die mechanischen Verbindungsmittel der Fassungsanschlusseinrichtung 130 sind bei dem hier beschriebenen Ausführungsbeispiel von Rastkanten 133 gebildet, die im Fassungsgehäuse 90 im Anschluss an eine Fassungsgehäuseöffnung 134 angeordnet sind. An zwei gegenüberliegenden Seiten der Fassungsgehäuseöffnung 134 sind federnd gelagert Haltelemente 135 angeformt, die angrenzend an die Fassungsgehäuseöffnung 134 elastisch schwenkbar angelenkt sind. An ihrem jeweiligen freien Ende tragen sie die zum jeweils gegenüberliegenden Halteelement 135 vorspringende Rastkante 133. Rastvorsprünge 72 mit Rastwölbungen 73 können durch die Fassungsgehäuseöffnung 134 hindurch in das Fassungsgehäuse 90 eingreifen und zur Herstellung der mechanischen Verbindung zwischen Fassung 20 und Leuchtmittel 23 die Rastkanten 133 umgreifen.

An der Verbindungsseite 131 des Fassungsgehäuses 90 sind ferner Fassungsanschlussöffnungen 135 vorgesehen, über die die Fassungsanschlüsse 117 zugänglich sind. Beim Ausführungsbeispiel sind jedem Fassungsanschluss 117 zwei Fassungsanschlussöffnungen 135 zugeordnet, so dass beide Anschlusszungen 120 eines Fassungsanschlusses 117 über jeweils eine Fassungsanschlussöffnung 135 zugänglich sind. Die Fassunsganschlussöffnungen 135 sind aus Gründen des Berührschutzes schlitzförmig ausgestaltet, so dass ein Berühren des Fassungsanschlusses 117 mit einem Finger unmöglich ist.

Vorzugsweise wird der elektrische Kontakt zwischen dem Leuchtmittel 23 und der Fassung 20 dadurch hergestellt, dass die Leuchtmittelanschlüsse 46 mit den Fassungsanschlüssen 117 zur Anlage gelangen. Bei den hier beschriebenen Ausführungsformen umgreifen die Leuchtmittelanschlüsse 46 die Fassungsanschlüsse 117. Dabei liegen die beiden Anschusszungen 120 eines Fassungsanschlusses 117 zwischen den beiden Kontaktflügeln 48 des zugeordneten Leuchtmittelanschlusses 46. Jeweils eine Kontaktfahne 48 steht dabei in Anlage mit einer Anschlusszunge 120. Durch die federnde Lagerung der Kontaktfahnen 48 sowie auch der Anschlusszungen 120 wird auch bei Herstellung der elektrischen Verbindung zwischen Leuchtmittel 23 und Fassung 20 eine mechanische Klemmkraft erzeugt. Sollte diese mechanische Klemmkraft ausreichen, kann auf weitere mechanische Verbindungsmittel zwischen Leuchtmittel 23 und Fassung 20 verzichtet werden.

Die Fassungsanschlusseinrichtung 130 ist punktsymmetrisch zu einem Mittelpunkt P auf der Verbindungsseite 131 vorgesehen. Die beiden Fassungsgehäuseöffnungen 134 sind auf einer radialen Geraden durch den Mittelpunkt P gleichmäßig beabstandet zum Mittelpunkt P in der Verbindungsseite 131 des Fassungsgehäuses 20 vorgesehen. Das Fassungsgehäuse 20 kann dabei um 180 Grad um eine Drehachse durch den Mittelpunkt P gedreht werden und in diesen beiden Drehlagen mit dem Leuchtmittel 23 verbunden werden.

Die vorliegende Erfindung betrifft ein Leuchtmittel 23 und eine Fassung 20 für eine Leuchte 15. Die Merkmale der Fassung 20 können auch unabhängig von den Merkmalen des Leuchtmittels 23 realisiert werden. Das Leuchtmittel 23 weist eine vorzugsweise plane Leuchtfläche 24 auf. Ein oder mehrere Halbleiterleuchtelemente sind in einem Leuchtmittelgehäuse 30 angeordnet. Die zur mechanischen und elektrischen Verbindung mit der Fassung 20 notwendige Leuchtmittel-Verbindungseinrichtung 70 ist auf der der Leuchtfläche 24 entgegengesetzten Rückseite 66 des Leuchtmittels 23 vorgesehen. Die Abmessungen des Leuchtmittels 23 sind vorzugsweise größer als die der Fassung 20, so dass das Leuchtmittel 23 mit Blickrichtung auf die Leuchtfläche 24 die Fassung 20 vollständig verdeckt. Dadurch lässt sich ein besonders ästhetischer Eindruck erreichen. Die Fassung weist an mehreren Fassungsgehäuseseiten 93 einen Versorgungsanschlussbereich auf, so dass die elektrischer Versorgung und Verkabelung der Fassung 20 wahlweise von verschiedenen Seiten oder auch gleichzeitig von mehreren Seiten erfolgen kann. Unabhängig von der Anzahl und der Anordnung der Versorgungsanschlussbereiche 94 sind an der Fassung 20 mehrere elektrische Versorgungsanschlüsse 95 gleicher Polarität vorhanden. Diese Versorgungsanschlüsse 95 gleicher Polarität sind elektrisch kurzgeschlossen. Zum Kurzschließen der Versorgungsanschlüsse gleicher Polarität dient jeweils ein Kurzschlussverbinder 116, wobei insbesondere zwei identische Kurzschlussverbinder 116 im Fassungsgehäuse 90 angeordnet sind. An die Fassung 20 wird eine Gleichspannung angelegt, die bis zu etwa 200 V betragen kann. Mit dieser Fassung 20 und dem Leuchtmittel 23 lassen sich modular sehr einfach große Gesamtleuchtflächen einer Leuchte 15 mit einem ästhetischen Gesamtbild erreichen.

### Bezugszeichenliste:

- 15: Leuchte
- 16: Versorgungsleitung
- 17: Spannungsquelle
- 18: Schalter

- 20: Fassung
- 21: Reihe
- 22: Spalte
- 23: Leuchtmittel
- 24: Leuchtfläche v. 23
- 25: Trägerelement
- 26: vordere Platte oder Folie
- 27: hintere Platte oder Folie

- 30: Leuchtmittelgehäuse
- 31: Rahmen
- 32: Gehäuserückwand
- 33: Lichtaustrittsöffnung
- 34: Steg
- 35: Anlagefläche
- 36: Stegabschnitt

- 39: Leuchtmittelkontaktteil
- 40: Leuchtmittelkontakt
- 41: Kontaktstelle
- 42: Kontaktzunge
- 42a: ebener Abschnitt v. 42
- 42b: freies Ende v. 42
- 43: Schlitz
- 44: erstes Ende v. 39
- 45: zweites Ende v. 39
- 46: Leuchtmittelanschluss
- 47: Querstück
- 48: Kontaktflügel
- 49: Biegestelle

- 51: Halteabschnitt v. 39
- 52: Halteklemme
- 53: Abkröpfung
- 54: Klemmzunge
- 55: Halteöffnung
- 56: Haltevorsprung
- 57: Federzone
- 58: Zungenhalteteil
- 59: Federzunge
- 60: Lagerelement

- 63: Aufnahmebereich
- 64: Innenseite v. 32
- 65: Leuchtmittelanschlussöffnung
- 66: Rückseite
- 67: Rastnase
- 68: Rahmenwange

- 70: Leuchtmittel-Verbindungseinrichtung
- 71: Rastmittel
- 72: Rastvorsprung
- 73: Rastauswölbung
- 74a: Schrägfläche v. 73
- 74b: Rastanlagefläche v. 73
- 75: Ausnehmung
- 76: Versorgungskanal
- 77: Boden
- 78: Kabel v. 16
- 79: Versteifungsrippe
- 80: Kodierelement
- 90: Fassungsgehäuse
- 91: Gehäuseschalen
- 92: Ecke v. 90
- 93: Fassungsgehäuseseite
- 94: Versorgungsanschlussbereich
- 95: Versorgungsanschluss
- 96: Anschlussaussparung
- 97: Klemmseiten
- 98: mittlerer Seitenabschnitt
- 99: Anschlussöffnung
- 100: Klemmsteg

- 103: Zugentlastungsmittel
- 104: Schraube
- 105: Innengewinde
- 106: Klemmkörper
- 107: Einsteckzunge
- 108: Einsteckschlitz
- 109: Klemmkante
- 110: Rasthaken

- 114: Anschlussfläche
- 115: Anschlussklemme
- 116: Kurzschlussverbinder
- 117: Fassungsanschluss
- 118: Basisabschnitt
- 119: Durchbrechung
- 120: Anschlusszunge
- 121: Knickstelle
- 122: Anschlussteil

- 125: Anschlussklemmkörper
- 126: Mittelstück
- 127: Abstützteil
- 128: Stützvorsprung

- 130: Fassungsanschlusseinrichtung
- 131: Verbindungsseite
- 132: Montageseite
- 133: Rastkante
- 134: Fassungsgehäuseöffnung
- 135: Fassungsanschlussöffnung

- E: Einsteckrichtung
- M: Mittelpunkt v. 23
- P: Mittelpunkt v. 20

## Patentansprüche

1. Leuchtmittel für eine Leuchte (15),
mit einem platten- oder folienartigen Trägerelement (25), das ein Halbleiterleuchtelement aufweist,
mit einem Leuchtmittelgehäuse (30), in dem das Trägerelement (25) gelagert ist, das auf seiner Vorderseite eine Lichtaustrittsöffnung (33) zur Abstrahlung von Licht aufweist und das auf seiner der Vorderseite entgegengesetzten Rückseite (66) eine Leuchtmittel-Verbindungseinrichtung (70) zur Herstellung einer mechanischen und elektrischen Verbindung mit einer Fassung (20) aufweist,
wobei das platten- oder folienartige Trägerelement (25) sandwichartig in mehreren Schichten aufgebaut ist, wobei das Halbleiterleuchtelement zwischen einer vorderen transparenten Platte oder Folie (26) und einer hinteren Platte oder Folie (27) des Trägerelements (25) angeordnet ist,
**dadurch gekennzeichnet, dass** das Leuchtmittelgehäuse (30) einen die Lichtaustrittsöffnung (33) umschließenden Rahmen (31) und eine die Rückseite (66) aufweisende Gehäuserückwand (32) umfasst, wobei der Rahmen (31) mit einer Anlagefläche (35) an einer Lichtabstrahlseite des Trägerelements (25) anliegt.

2. Leuchtmittel nach Anspruch 1,
**dadurch gekennzeichnet, dass** das Leuchtmittelgehäuse (30) auf seiner Rückseite (66) eine Ausnehmung (75) aufweist, in die die Fassung (20) bei hergestellter mechanischer Verbindung eingreift.

3. Leuchtmittel nach Anspruch 2,
**dadurch gekennzeichnet, dass** die Leuchtmittel-Verbindungseinrichtung (70) in der Ausnehmung (75) angeordnet ist.

4. Leuchtmittel nach Anspruch 1,
**dadurch gekennzeichnet, dass** die Leuchtmittel-Verbindungseinrichtung (70) symmetrisch ist zu einem Symmetriepunkt (M) oder einer Symmetrieachse auf der Rückseite (66).

5. Leuchtmittel nach Anspruch 1,
**dadurch gekennzeichnet, dass** die Leuchtmittel-Verbindungseinrichtung (70) ein Rastmittel (71) und/oder ein Steckmittel zur Herstellung einer mechanischen Verbindung mit der Fassung (20) aufweist.

6. Leuchtmittel nach Anspruch 1,
**dadurch gekennzeichnet, dass** die Aufsteckkraft und/oder Abzugskraft beim Herstellen beziehungsweise beim Lösen der Verbindung zwischen dem Leuchtmittel (23) und der Fassung (20) durch die Form und/oder Größe eines Rastvorsprungs (72) des Rastmittels (71) vorgebbar ist.

7. Leuchtmittel nach Anspruch 1,
**dadurch gekennzeichnet, dass** die Leuchtmittel-Verbindungseinrichtung (70) eine Kodiereinrichtung mit wenigstens einem Kodierelement (80) aufweist, um wenigstens eine zulässige Relativlage des Leuchtmittels (23) gegenüber der Fassung (20) beim Herstellen der Verbindung vorzugeben.

8. Leuchtmittel nach Anspruch 1,
**dadurch gekennzeichnet, dass** zwischen dem Trägerelement (25) und der Gehäuserückwand (32) elastische Lagerelemente (60) vorhanden sind, die das Trägerelement (25) gegen die Anlagefläche (35) am Rahmen (31) drücken.

9. Leuchtmittel nach Anspruch 1,
**dadurch gekennzeichnet, dass** die Leuchtmittel-Verbindungseinrichtung (70) elektrische Leuchtmittelanschlüsse (46) aufweist, die an der Rückseite (66) zugänglich sind.

10. Leuchtmittel nach Anspruch 1,
**dadurch gekennzeichnet, dass** am Trägerelement (25) Halbleiterkontaktflächen (28) vorhanden sind, die entweder mit der Anode oder der Kathode des Halbleiterleuchtelements elektrisch verbunden sind und dass die Halbleiterkontaktflächen (28) auf der einer Lichtabstrahlseite des Trägerelements (25) entgegengesetzten Seite vorgesehen sind.

11. Leuchtmittel nach Anspruch 9 und 10,
**dadurch gekennzeichnet, dass** ein elektrisch leitendes Leuchtmittelkontaktteil (39) vorgesehen ist, das einen der Leuchtmittelanschlüsse (46) und einen der Leuchtmittelkontakte (40) aufweist und dass jeder Leuchtmittelanschluss (46) durch das Leuchtmittelkontaktteil (39) elektrisch mit einem Leuchtmittelkontakt (40) verbunden ist, der an einer der Halbleiterkontaktflächen (28) anliegt.

12. Leuchtmittel nach Anspruch 8 und 11,
**dadurch gekennzeichnet, dass** die Lagerelemente (60) von Federzonen (57) des Leuchtmittelkontaktteils (39) gebildet sind.

13. Leuchtmittel nach Anspruch 1,
**dadurch gekennzeichnet, dass** am Trägerelement (25) Halbleiterkontaktflächen (28) vorhanden sind, die entweder mit der Anode oder der Kathode des Halbleiterleuchtelements elektrisch verbunden sind und dass das Trägerelement (25) zwei Halbleiterleuchtelemente mit jeweils zwei Halbleiterkontaktflächen (28) aufweist.

14. Leuchte
mit einem Leuchtmittel (23) nach einem der vorhergehenden Ansprüche
mit einer Fassung (20), die an ihrer dem Leuchtmittelgehäuse (30) zugeordneten Verbindungsseite (131) eine Fassungsanschlusseinrichtung (130) aufweist, wobei die Leuchtmittel-Verbindungseinrichtung (70) zusammen mit der Fassungsanschlusseinrichtung (130) zur Herstellung einer mechanischen und elektrischen Verbindung zwischen dem Leuchtmittel (23) und der Fassung (20) dient.

## Claims

1. Illuminant for a lamp (15),
with a plate- or film-like carrier element (25) comprising a semiconductor lighting element,
with an illuminant housing (30) in which the carrier element (25) is mounted, and which has on its front side a light outlet opening (33) for emission of light and on its back side (66) opposite the front side an illuminant connection device (70) for creating a mechanical and electrical connection with a base (20),
wherein the plate- or film-like carrier element (25) is constructed sandwich-fashion in several layers, wherein the semiconductor lighting element is arranged between a front transparent plate or film (26) and a rear plate or film (27) of the carrier element (25),
**characterised in that** the illuminant housing (30) has a frame (31) which surrounds the light outlet opening (33) and a housing rear wall (32) which comprises the back side (66), wherein the frame (31) lies with a contact face (35) against a light emission side of the carrier element (25).

2. Illuminant according to claim 1, **characterised in that** the illuminant housing (30) has on its back side (66) a recess (75) in which the base (20) engages when a mechanical connection is created.

3. Illuminant according to claim 2, **characterised in that** the illuminant connection device (70) is arranged in the recess (75).

4. Illuminant according to claim 1, **characterised in that** the illuminant connection device (70) is symmetrical to a point of symmetry (M) or an axis of symmetry on the back side (66).

5. Illuminant according to claim 1, **characterised in that** the illuminant connection device (70) has a catch means (71) and/or a plug-in means for creating a mechanical connection to the base (20).

6. Illuminant according to claim 1, **characterised in that** the plug-in force and/or withdrawal force for respectively creating or releasing the connection between the illuminant (23) and the base (20) is predefined by the form and/or size of a catch protrusion (72) of the catch means (71).

7. Illuminant according to claim 1, **characterised in that** the illuminant connection device (70) has a coding device with at least one coding element (80) in order to predefine at least one permitted position of the illuminant (23) relative to the base (20) when the connection is created.

8. Illuminant according to claim 1, **characterised in that** elastic mounting elements (66) are present between the carrier element (25) and the housing rear wall (32) and press the carrier element (25) against the contact face (35) on the frame (31).

9. Illuminant according to claim 1, **characterised in that** the illuminant connection device (70) has electrical illuminant connections (46) which are accessible on the back side (66).

10. Illuminant according to claim 1, **characterised in that** semiconductor contact faces (28) are present on the carrier element (25) which are electrically connected either to the anode or to the cathode of the semiconductor lighting element, and that the semiconductor contact faces (28) are provided on the side of the carrier element (25) opposite the light emission side.

11. Illuminant according to claim 9 and 10, **characterised in that** an electrically conductive illuminant contact part (39) is provided which comprises one of the illuminant connections (46) and one of the illuminant contacts (40), and that each illuminant connection (46) is electrically connected by the illuminant contact part (39) to an illuminant contact (40) which lies against one of the semiconductor contact faces (28).

12. Illuminant according to claim 8 and 11, **characterised in that** the mounting elements (60) are formed by spring zones (57) on the illuminant contact part (39).

13. Illuminant according to claim 1, **characterised in that** semiconductor contact faces (28) are present on the carrier element (25) which are electrically connected either to the anode or to the cathode of the semiconductor lighting element, and that the carrier element (25) comprises two semiconductor lighting elements, each with two semiconductor contact faces (28).

14. Lamp,
with an illuminant (23) according to any of the preceding claims,
with a base (20) which has a base connection device (130) on its connection side (131) assigned to the illuminant housing (30), wherein the illuminant connection device (70) together with the base connection device (130) serves to create a mechanical and electrical connection between the illuminant (23) and the base (20).

## Revendications

1. Moyen d'éclairage pour un luminaire (15),
comprenant un élément support (25) en forme de plaque ou de feuille, qui présente un élément d'éclairage à semi-conducteurs,
comprenant un boîtier de moyen d'éclairage (30) dans lequel est monté l'élément support (25) et qui présente, sur sa face avant, une ouverture de sortie de lumière (33) destinée au rayonnement de lumière, et qui présente, sur sa face arrière (66) opposée à la face avant, un dispositif de liaison de moyen d'éclairage (70), destiné à établir une liaison mécanique et électrique avec une douille (20),
dans lequel l'élément support (25) en forme de plaque ou de feuille est construit en plusieurs couches, à la manière d'un sandwich, l'élément d'éclairage à semi-conducteurs étant disposé entre une plaque ou feuille antérieure (26) transparente et une plaque ou feuille postérieure (27) de l'élément support (25),
**caractérisé en ce que** le boîtier de moyen d'éclairage (30) comporte un cadre (31), entourant l'ouverture de sortie de lumière (33), et une paroi arrière de boîtier (32) présentant la face arrière (66), le cadre (31) étant appliqué avec une surface d'appui (35) contre un côté de rayonnement de lumière de l'élément support (25).

2. Moyen d'éclairage selon la revendication 1, **caractérisé en ce que** le boîtier de moyen d'éclairage (30) présente sur sa face arrière (66) un évidement (75) dans lequel s'engage la douille (20) lorsque la liaison mécanique est établie.

3. Moyen d'éclairage selon la revendication 2, **caractérisé en ce que** le dispositif de liaison de moyen d'éclairage (70) est placé dans l'évidement (75).

4. Moyen d'éclairage selon la revendication 1, **caractérisé en ce que** le dispositif de liaison de moyen d'éclairage (70) est symétrique par rapport à un point de symétrie (M) ou un axe de symétrie sur la face arrière (66).

5. Moyen d'éclairage selon la revendication 1, **caractérisé en ce que** le dispositif de liaison de moyen d'éclairage (70) présente un moyen d'encliquetage (71) et/ou un moyen d'enfichage destiné à établir une liaison mécanique avec la douille (20).

6. Moyen d'éclairage selon la revendication 1, **caractérisé en ce que** la force d'enfichage et/ou la force de retrait, lors de l'établissement ou lors de la séparation de la liaison entre le moyen d'éclairage (23) et la douille (20), peuvent être prédéterminées par la forme et/ou la taille d'une saille d'encliquetage (72) du moyen d'encliquetage (71).

7. Moyen d'éclairage selon la revendication 1, **caractérisé en ce que** le dispositif de liaison de moyen d'éclairage (70) présente un dispositif de codage comprenant au moins un élément de codage (80), afin de prédéterminer au moins une position relative admissible du moyen d'éclairage (23) par rapport à la douille (20), lors de l'établissement de la liaison.

8. Moyen d'éclairage selon la revendication 1, **caractérisé en ce qu'**il est prévu, entre l'élément support (25) et la paroi arrière de boîtier (32), des éléments de montage (60) élastiques qui poussent l'élément support (25) contre la surface d'appui (35) sur le cadre (31).

9. Moyen d'éclairage selon la revendication 1, **caractérisé en ce que** le dispositif de liaison de moyen d'éclairage (70) présente des bornes de connexion de moyen d'éclairage (46) électriques qui sont accessibles sur la face arrière (66).

10. Moyen d'éclairage selon la revendication 1, **caractérisé en ce que** sont prévues sur l'élément support (25), des surfaces de contact de semi-conducteurs (28) qui sont reliées électriquement soit à l'anode soit à la cathode de l'élément d'éclairage à semi-conducteurs, et **en ce que** les surfaces de contact de semi-conducteurs (28) sont prévues sur le côté opposé à un côté de rayonnement de lumière de l'élément support (25).

11. Moyen d'éclairage selon les revendications 9 et 10, **caractérisé en ce qu'**il est prévu une pièce de contact de moyen d'éclairage (39) électriquement conductrice qui présente l'une des bornes de moyen d'éclairage (46) et l'un des contacts de moyen d'éclairage (46), et **en ce que** chaque borne de moyen d'éclairage (46) est reliée électriquement, par l'intermédiaire de la pièce de contact de moyen d'éclairage (39), à un contact de moyen d'éclairage (40) qui est appliqué contre l'une des surfaces de contact de semi-conducteurs (28).

12. Moyen d'éclairage selon les revendications 8 et 11, **caractérisé en ce que** les éléments de montage (60) sont formés par des zones faisant ressort (57) de la pièce de contact de moyen d'éclairage (39).

13. Moyen d'éclairage selon la revendication 1, **caractérisé en ce que** sur l'élément support (25), sont prévues des surfaces de contact de semi-conducteurs (28) qui sont reliées électriquement soit à l'anode soit à la cathode de l'élément d'éclairage à semi-conducteurs, et **en ce que** l'élément support (25) présente deux éléments d'éclairage à semi-conducteurs comportant respectivement deux surfaces de contact de semi-conducteurs (28).

14. Luminaire
comprenant un moyen d'éclairage (23) selon l'une des revendications précédentes,
comprenant une douille (20) qui présente un dispositif de raccordement de douille (130) sur son côté de liaison (131) associé au boîtier de moyen d'éclairage (30), le dispositif de liaison de moyen d'éclairage(70) servant conjointement avec le dispositif de raccordement de douille (130) à l'établissement d'une liaison mécanique et électrique entre le moyen d'éclairage (23) et la douille (20).
